# EUROPÄISCHE PATENTSCHRIFT

(11) **EP 4 074 758 B1**
(45) Veröffentlichungstag und Bekanntmachung des Hinweises auf die Patenterteilung: **01.05.2024**
(21) Anmeldenummer: 22172706.8
(22) Anmeldetag: 11.05.2021
(51) Int. Cl.: C08J 3/12, C08L 3/02, C08J 5/18, C08J 7/04, B29B 9/12, B29B 9/14, B29B 9/16, B29B 7/00, B29B 7/90, B29B 7/92

(54) **GRANULAT AUS REIN NATÜRLICHEN BESTANDTEILEN; GRANULAT ZUR HERSTELLUNG KOMPOSTIERBARER PRODUKTE SOWIE HERSTELLUNGSVERFAHREN DES GRANULATS UND DARAUS ZU ERHALTENDEN PRODUKTEN**
GRANULATE OF ONLY NATURAL CONSTITUTIONS; GRANULATE FOR THE MANUFACTURE OF COMPOSABLE PRODUCTS AND METHOD FOR MANUFACTURING THE GRANULATE AND THE PRODUCTS OBTAINED THEREFROM
GRANULÉS CONSTITUÉS D'ÉLÉMENTS PUREMENT NATURELS; GRANULÉS POUR LA FABRICATION DE PRODUITS COMPOSTABLES AINSI QUE PROCÉDÉ DE FABRICATION DESDITS GRANULÉS ET PRODUITS OBTENUS À PARTIR DE CEUX-CI

(30) Priorität: 11.05.2020 EP 20173968; 13.08.2020 WO PCT/EP2020/072820; 17.12.2020 EP 20215225; 17.12.2020 DE 202020107372 U; 17.12.2020 DE 202020107373 U; 17.12.2020 DE 202020107374 U
(43) Veröffentlichungstag der Anmeldung: 19.10.2022
(62) Teilanmeldung aus: 21729409.9
(73) Patentinhaber: Hope Tree International GmbH, 80336 München (DE)
(72) Erfinder: DINZINGER, Lambert Dustin, 82538 Geretsried-Gelting (DE)
(74) Vertreter: Grund, Martin

(56) Entgegenhaltungen:
- WO-A2-2007/062265
- CN-A- 1 193 636
- DE-A1- 19 953 867
- DE-U1-202019 005 348
- DATABASE WPI Week 201530 Thomson Scientific, London, GB; AN 2015-26141Q XP002807473, & CN 104 387 621 A (JILIN ZHONGZHILIN AGRIC SCI & TECHNOLOGY CO LTD) 4. März 2015 (2015-03-04)

## Beschreibung

### I. Gebiet der Erfindung

Die vorliegende Erfindung liegt auf dem Gebiet der biologisch abbaubaren und kompostierbaren Materialien und daraus hergestellten Produkten. Dies umfasst insbesondere biologisch abbaubares und kompostierbares Material in Form von Granulat, welches zur Herstellung von biologisch abbaubaren und kompostierbaren Gebrauchsgegenständen des täglichen Lebens verwendet werden kann. Aus dem Granulat können auch biologisch abbaubare und kompostierbare Verpackungsmaterialien und Folien hergestellt werden. Somit wird durch das bereitgestellte Granulat und daraus hergestellten Produkten ein Ersatz zu herkömmlichem Plastikgranulat und Plastik- bzw. Styroporprodukten bereitgestellt. Unter Verwendung von pflanzlicher Stärke und pflanzlichem Dickungs- und Geliermittel in einem bestimmten Mengenverhältnis kann biologisch abbaubares und sogar gartenkompostierbares Granulat hergestellt werden. Die Zugabe von Glycerin, Sorbit pflanzlichen Fasern (wie Strohfasern, Grasfasern, etc.), Zellstoff, Holzstoff, Stearat, Öl, Naturlatex insbesondere Naturkautschuk und/oder Wachs, insbesondere Rapswachs oder Sojawachs, kann dem Granulat weitere vorteilhafte Eigenschaften verleihen. Hierbei kann das Granulat bzw. das hieraus entstehende Produkt in transparenter, opaker oder undurchsichtiger Ausführungsform hergestellt werden. Optional kann durch Zugabe von Lebensmittelfarbe die Farbe des Granulats bzw. Produkts modifiziert werden. Optional kann durch Zugabe von natürlichen Düften und Aromen der Geruch des Granulats bzw. Produkts modifiziert werden. Optional kann durch Zugabe von Geschmäckern der Geschmack des Granulats bzw. Produkts modifiziert werden.

### II. Hintergrund der Erfindung

Allein in Deutschland werden täglich tausende Tonnen an Kunststoff-Produkten hergestellt und anschließend verbraucht und weggeworfen. Besonders gefragt sind dabei Einwegprodukte bzw. Gebrauchsgegenstände des täglichen Lebens die aufgrund ihrer Vorteile - einfach zu verwenden, praktisch und hygienisch - täglich zu hunderttausenden verbraucht werden. Solche Produkte werden bisher aus herkömmlichem Kunststoff hergestellt oder enthalten sogenannten Biokunststoff. Produkte aus Kunststoff, sind weder gut recyclebar noch sind sie kompostierbar, sie können meistens nur verbrannt oder unter enormem Kosten- und Energieaufwand verwertet werden und schaden so dem Erhalt unseres Ökosystems. Auch Produkte aus vermeintlich biologisch abbaubarem Biokunststoff wie PLA können nachweislich nicht restlos abgebaut oder kompostiert werden. Diese Tatsache hat zu einem Verbot der Verwendung von Biokunststoff ab Mitte 2021 in Einwegprodukten geführt. Infolgedessen ist der Bedarf an einer umweltfreundlichen, recycel- und kompostierbaren Alternative zu herkömmlichem Kunststoff und Biokunststoff für die Herstellung diverser Produkte enorm hoch und auch zwingend notwendig, um den ökologischen Fußabdruck zu minimieren. Herkömmliches Kunststoffgranulat entweicht leicht und teilweise unbemerkt der Produktions- und Verarbeitungskette und endet dann oftmals in Gewässern und bildet so einen großen Anteil des Mikroplastiks bzw. des Plastikmülls in Meeren und an Küsten. Kunststoffgranulat findet sich daher auch häufig im Verdauungstrakt von Seevögeln und Meerestieren die an den daraus entstehenden gesundheitlichen Folgen den Tod erleiden.

Dieses Problem entsteht bei vorliegendem Granulat nicht. Das in der Erfindung dargestellte Granulat löst sich problemlos an Land und in Meeren auf und könnte sogar von Mensch und Tier verzehrt werden ohne Schaden zu erzeugen.

Das Granulat der vorliegenden Erfindung bietet eine nachhaltige Alternative zu Kunststoffgranulat und den daraus gewonnenen Produkten, samt Verfahren zu deren Herstellung. Im Gegensatz zu herkömmlichen Kunststoffgranulaten und daraus hergestellten Produkten, besteht das erfindungsgemäße Granulat und die daraus hergestellten Produkte aus rein pflanzlichen und/oder natürlichen, unbehandelten Materialen, insbesondere pflanzlicher Stärke und pflanzlichem Dickungs- und/oder Geliermittel, sowie optional aus pflanzlichen Fasern wie Strohfasern, Grasfasern, Baobabfasern, Zellstoff, Holzstoff , pflanzlichen Biopolymeren, pflanzlichen Konservierungsstoffen und pflanzlichen Wachsen.

Granulat ist die typische Lieferform von thermoplastischen Kunststoffen der Rohstoffhersteller für die kunststoffverarbeitende Industrie. Es ist wegen seiner Rieselfähigkeit ein Schüttgut wie Sand oder Kies und damit ebenso einfach wie diese zu transportieren und zu portionieren. Es gibt aber auch Schmelzgranulate für Endanwender. Das hierin offenbarte Material lässt sich problemlos zu Granulat, also Schüttgut, verarbeiten. Auch ein anschließendes weiterverarbeiten des Granulats gestaltet sich problemlos. Das erzeugte Granulat und die daraus hergestellten Produkte sind nicht nur leicht zu recyceln bzw. zu kompostieren, sie werden auch aus nachwachsenden Rohstoffen produziert, die eine positive CO₂-Bilanz aufweisen. Daher bildet das Granulat der vorliegenden Erfindung als Rohstoff diverser Produkte eine nachhaltige und umweltfreundliche Alternative zu herkömmlichem Kunststoff.

WO 2019/046789 A1 beschreibt essbare und biologisch abbaubare Gefäße zur Aufnahme von Lebensmitteln und Flüssigkeiten, wobei das essbare Material hauptsächlich aus einem oder mehreren Hydrokolloiden besteht.

DE19953867 offenbart ein biologisch abbaubares und kompostierbares Granulat mit einer Restfeuchte von bis zu 9% zur Herstellung von Gebrauchsgegenständen bestehend aus natürlichen Bestandteilen umfassend 70-90% pflanzliche Stärke, 1-10% Naturfasern, 0-10% Dickungs- und/oder Geliermittel und 0-2 Gew.-% andere Zusätze.

### III. Zusammenfassung der Erfindung

Die Erfindung wird durch die Ansprüche definiert.

Die vorliegende Erfindung bezieht sich auf biologisch abbaubares und kompostierbares Granulat. Das Granulat wird erfindungsgemäß zur Herstellung von biologisch abbaubaren und bevorzugt kompostierbaren Produkten und Gebrauchsgegenständen verwendet. Die vorliegende Erfindung bezieht sich auch auf Verfahren zur Herstellung des erfindungsgemäßen Granulats sowie Verfahren zur Herstellung unterschiedlicher Produkte durch Verwendung des erfindungsgemäßen Granulats. Die Erfindung wird durch die Ansprüche definiert und wird im Folgenden zusammengefasst.

Das Granulat der vorliegenden Erfindung bestehend aus natürlichen, bevorzugt rein pflanzlichen Bestandteilen umfassend Stärke und Dickungs-und Geliermittel weist eine Feststoffzusammensetzung bestehend aus

| | |
|---|---|
| Pflanzliche Stärke | 75-90 Gew.-% |
| Naturfasern | 1-10 Gew.-% |
| Dickungs- und/oder Geliermittel | 0-10 Gew.-% |
| Optionale Zusätze | 0-10 Gew.-% auf, |

wobei das Granulat eine Restfeuchte von 30-40%, bevorzugt 35% aufweist.

In einer bevorzugten Ausführungsform weist das Granulat eine Feststoffzusammensetzung bestehend aus

| | |
|---|---|
| Pflanzliche Stärke | 80-90 Gew.-% |
| Naturfasern | 8-10 Gew.-% |
| Optionale Zusätze | 0-2 Gew.-% auf |

und hat eine Restfeuchte von 30-40%.

Die pflanzliche Stärke im Granulat ist native, unbehandelte Stärke und umfasst Weizenstärke, Kartoffelstärke, Maisstärke, Tapiokastärke oder Stärke aus Maniok, Knollenbohne, Batate, Yamswurzel, Knollen-Platterbse, Arakacha, Knolligem Sauerklee, Knolliger Kapuzinerkresse, Ulluco, Ostindischer Pfeilwurz, Pfeilwurz, Achira, Taro, Tannia, Weißer Seerose, Gelber Teichrose oder Chayote oder eine Mischung, bevorzugt Weizenstärke, Kartoffelstärke, Maisstärke, Reisstärke, Tapiokastärke oder eine Mischung davon.

Das Dickungs- und/oder Geliermittel im Granulat umfasst Guarkernmehl, Xanthan Gum, Teufelszunge, Agar-Agar, Pektin, Carrageen, Alginat, Johannisbrotkernmehl, Sago, Gummi Arabicum, Reismehl, Hartweizenmehl oder Hartweizengrieß oder eine Mischung davon.

Die optionalen Zusätze im Granulat umfassen pflanzliches Glycerin und/oder Sorbit, Wachs, Naturkautschuk, Biopolymer, Öl, Konservierungsstoffe, Essig, Lecithin, pflanzliches Stearat, Lebensmittelfarbe, Aromen, Duftstoffe und eine Mischung davon.

Das Granulat umfasst kein Bioplastik, keine chemisch veränderten (Bio-)Polymere umfassend biobasierte Polymere umfassend Polylactid (PLA), Polyhydoxyalkanoate (PHA), Polyhydroxybutyrat (PHB), und keine erdölbasierten Biopolymere.

Die Erfindung betrifft ferner ein Verfahren zur Herstellung von Granulat umfassend die Schritte:
a) Herstellen einer Mischung bestehend aus festen und flüssigen Bestandteilen, wobei die Mischung besteht aus

| | |
|---|---|
| Pflanzliche Stärke | 75-90 Gew.-% |
| Naturfasern | 1-10 Gew.-% |
| Dickungs- oder | |
| Geliermittel | 0-10 Gew.-% |
| Optionale Zusätze | 0-10 Gew.-% |

Bezogen auf das Gewicht der Masse zusätzlich:

| | |
|---|---|
| Flüssige Bestandteile umfassend Wasser | 70-80 Gew.-%; |

b) Verdichten der Masse und Formen eines Granulatstrangs;
c) Aushärten und Entfeuchten des in Schritt b) erzeugten Granulatstrangs, wobei im Granulatstrang eine Restfeuchte von 10-30%, bevorzugt 15-22% zurück bleibt;
d) Schneiden des in c) erzeugten Granulatstrangs zu Granulat.

Bevorzugt werden in Schritt a) die festen Bestandteile und die flüssigen Bestandteile zunächst getrennt voneinander gemischt und anschließend die Mischung der festen Bestandteile mit der Mischung der flüssigen Bestandeile gemischt.

Optional kann im Verfahren zur Herstellung von Granulat Schritt d) vor Schritt c) erfolgen.

Optional erfolgt Schritt b) in einem Schnecken-Extruder.

Die vorliegende Erfindung bezieht sich auch auf die Verwendung des Granulats zur Herstellung von biologisch abbaubaren, bevorzugt kompostierbaren Gebrauchsgegenständen.

Die Erfindung bezieht sich ferner auf ein Verfahren zur Herstellung von biologisch abbaubaren und kompostierbaren Gebrauchsgegenständen unter Verwendung des erfindungsgemäßen Granulats.

Das Verfahren zur Herstellung von biologisch abbaubaren, bevorzugt kompostierbaren Gebrauchsgegenständen unter Verwendung des erfindungsgemäßen Granulats umfasst die Verarbeitung des Granulats im Spritzgussverfahren.

Das Granulat kann im Spritzgussverfahren verarbeitet werden, wobei die Verarbeitung im Spritzgussverfahren bei Temperaturen zwischen 50°C und 100°C erfolgt.

Zudem ist sowohl das Granulat als auch die daraus hergestellten Gebrauchsgegenstände gartenkompostierbar. Das Granulat und die daraus hergestellten Gebrauchsgegenstände sind auch ultrakompostierbar.

### IV. Vorteile des Granulats

Die Verwendung von hierin beschriebenem Granulat erweist sich in vielerlei Hinsicht als vorteilhaft.

Durch die Verwendung der pflanzlichen Rohstoffe Stärke (z.B. Weizenstärke), Dickungs- und/oder Geliermittel (z.B. eine Mischung aus Guarkernmehl und Xanthan), sowie optionalen Zusätzen wie pflanzliche Fasern ist das Granulat, sowie die daraus erzeugten Produkte, im Gegensatz zu herkömmlichen Plastikprodukten, leicht recycelbar, vollständig biologisch abbaubar und natürlich kompostierbar. Die Kompostierdauer eines Trinkhalms, welcher aus hierin beschriebenem Granulat hergestellt wurde, wurde ermittelt. Die Testung ergab eine Kompostierdauer des Trinkhalms von unter vier Wochen in der Intensivrotte, und von 27 Tagen bei Trockenvergärung. Dieser Wert liegt weit unter dem Wert alternativer Trinkhalme. Eine optionale Beschichtung der Trinkhalme verlängert den Kompostiervorgang um nur wenige Tage, sodass auch beschichtete Gebrauchsgegenstände wie etwa beschichtete Trinkhalme aus hierin beschriebenem Granulat innerhalb 4-8 Wochen kompostierbar sind. Ferner ist das Granulat sowie die daraus hergestellten Produkte gemäß EN 13432, Version 2000-12 kompostierbar. Das Granulat und die daraus hergestellten Gebrauchsgegenstände sind zudem auch gartenkompostierbar. Zudem ist das Granulat und die daraus hergestellten Produkte ultrakompostierbar, also in weniger als 50 Tagen kompostiert. Dies gilt zum Beispiel nicht für Bioplastik/Biokunststoff wie PLA. Zudem wurden Gebrauchsgegenstände hergestellt aus dem vorliegenden Granulat von einer zuständigen Behörde (DEKRA e.V.) als Lebensmittelecht getestet.

Die pflanzliche Stärke wird als Naturprodukt, also in natürlicher, nicht modifizierter und nicht behandelter Form eingesetzt und wird auch während des Herstellungsvorgangs zu Granulat nicht chemisch verändert. Dies schont die Umwelt und macht das Granulat noch natürlicher. Auch das im Herstellungsprozess entstehende Extrudat, welches getrocknet und zu Granulat geschnitten wird, wird nicht chemisch/physikalisch nachbehandelt, um es zu verfestigen und/oder zu stabilisieren.

Das vorliegende Granulat umfasst ferner keine Biokunststoffe, keine biobasierten Kunststoffe und keine erdölbasierten Biopolymere. Unter Biokunstsoffen werden alle Biopolymere die durch chemische Veränderung der natürlichen und/oder pflanzlichen Rohstoffe gewonnen werden verstanden. Auch bestimmte erdölbasierte Polymere sind biologisch abbaubar und daher per Definition "Biopolymere". Erdölbasiere Polymere umfassen Polyvinylalkohol (PVA), Polybutylenadipat-terephthalat (PBAT), Polybutylensuccinat (PBS), Polycaprolactone (PCL) und Polyglycolid (PGA). Erdölbasierte Polymere werden vorliegend nicht verwendet und sind kein Bestandteil des Granulats oder der daraus gewonnenen Gebrauchsgegenstände. Biobasierte Kunststoffe, die durch umfassende chemische Veränderung der biogenen Rohstoffe hergestellt wurden (z. B. Polylactide (PLA) aus mit Hilfe der weißen Biotechnologie erzeugter Milchsäure), werden nicht vom Granulat oder den daraus hergestellten Gebrauchsgegenständen umfasst. Ferner zählen neben Polylactid (PLA), auch Polyhydroxyalkanoate (PHA), Polyhydroxybutyrat (PHB), Epoxyacylate und Stoffe auf Ligninbasis wie Thermoplaste zu den biobasierten Kunststoffen.

Im Vergleich zu anderen biologisch abbaubaren und/oder kompostierbaren Gebrauchsgegenständen weisen Gebrauchsgegenstände hergestellt aus dem vorliegenden Granulat eine sehr hohe Materialdichte auf. Es ist darauf hinzuweisen, dass die Granulierung, also die Herstellung des Granulats der Rohstoffe der Mischung als eine "Vorverdichtung" des Materials angesehen werden kann. Durch die Verwendung des vorverdichteten Granulats lässt sich das Material im weiteren Verarbeitungsprozess noch weiter verdichten und homogenisieren. Ferner geschieht die Verdichtung und Homogenisierung unter Verwendung des Granulates leichter und schneller als unter Verwendung der Rohstoffe selbst. Durch Gebrauch des Granulats stellt sich der Herstellungsprozess eines biologisch abbaubaren und kompostierbaren Gebrauchsgegenstands demnach energiesparender und zeiteffizienter dar. Durch die schon im Granulat existierende hohe Dichte des Materials kann daher im weiteren Verarbeitungsverfahren eine noch höhere Dichte im Endprodukt entstehen, als sie in einem Endprodukt direkt hergestellt aus den Rohstoffen entstehen würde.

Diese hohe Materialdichte ist durch Verwendung des bereitgestellten Granulates garantiert. Die hohe Materialdichte führt zu einer bisher nicht erreichten Stabilität der aus dem Granulat hergestellten Gegenstände, wodurch das Granulat zur Herstellung einer Vielzahl unterschiedlicher Gebrauchsgegenstände verwendet werden kann. Die hohe Materialdichte lässt sich aus den hierin beschriebenen Vergleichstestungen bezüglich Zug- und Bruchfestigkeit ableiten.

Zusätzlich weist das vorverdichtete Granulat aber besonders das Endprodukt hergestellt aus dem Granulat aufgrund der Dichte eine höhere Resistenz gegen Flüssigkeiten wie Wasser, Öle und Fette auf.

Ferner ist die Oberflächenstruktur der aus Granulat hergestellten Produkte durch die hohe Dichte im Material sehr glatt. Dies hat haptische und optische Vorteile. Das aus dem Granulat hergestellte Produkt fühlt sich durch die glatte Struktur sehr hochwertig an. Eine glatte Oberfläche weist aber auch eine höhere Spannung auf als eine raue Oberfläche und bewirkt somit ebenfalls eine höhere Resistenz gegen Flüssigkeiten wie Wasser.

Aufgrund der hohen Dichte und daraus resultierenden Stabilität des Endprodukts können aus dem hierin beschriebenem Granulat diverse Gebrauchsgegenstände hergestellt werden wie beispielsweise: Hilfsmittel zum Essen oder Trinken, wie Trinkhalme, Trinkbecher, Eisbecher, Schnapsgläser/Shotgläser, Pommesgabeln, Einwegbesteck im Allgemeinen, Eislöffel, Kaffee-Umrührer, medizinische Bedarfsartikel wie Wattestäbchen, Zahnbürsten und Mundspatel, aber auch Gebrauchsgegenstände des täglichen Lebens wie Einwegkleiderbügel, Kämme, Luftballonhalter, Dosierungslöffel z.B. für Waschpulver oder Kaffee, Heftklammern, und auch Verpackungsmaterial wie Gemüse-/Obsttransportschalen, Einwegtüten, Folien, Schalen und dergleichen. Es ist darauf hinzuweisen, dass das vorliegende Granulat zu jeglichem bisher bestehenden kurzlebigen Plastikerzeugnis verarbeitet werden kann. Zudem führt die hohe Materialdichte zu einer längeren Gebrauchsdauer des Gebrauchsgegenstands in Verbindung mit Flüssigkeiten und Speisen, zu erwähnen sind hier Trinkhalme, Eisbecher und Eislöffel. Trinkhalme hergestellt aus dem vorliegenden Granulat unter Berücksichtigung der hierin offenbarten Herstellungstechnik sind bis 8 Stunden, mindestens aber 6 Stunden lang stabil, wenn sie in einer Flüssigkeit wie Wasser oder Saft stehen. Die hohe Materialdichte des Granulats und der daraus hergestellten Erzeugnisse wirkt sich auch positiv auf die Transporteigenschaften des Granulats und der Erzeugnisse daraus aus. Granulat kann unkompliziert und portioniert als Streu- oder Schüttgut in Säcken oder Boxen transportiert werden ohne dass es dabei pulverisiert. Das Granulat kann daher einfach und platzsparend an jeglichen Ort auf der Welt transportiert werden. Die durch die Materialdichte des Materials gewonnene Stabilität der Endprodukte minimiert aber auch den Verschleiß beim Transport der fertigen Produkte. Somit wird ein Bruch beim Transport minimiert und ist unter normalen Umständen auszuschließen. Es entsteht kein Verlust.

Unter Anwendung des hierin beschriebenen Herstellungsverfahrens von Endprodukten (Gebrauchsgegenständen) hergestellt aus dem hierin beschriebenem Granulat, können schnelle und daher optimale Prozess-Zykluszeiten von 6-14 Sekunden ab Einfüllung des Granulats bis Herausnehmen des Produkts aus der Form (Spritzguss) erzielt werden. Das bereitgestellte Granulat lässt sich problemlos in Kombination mit einem Vakuum-Befüller verwenden. Eine automatische Befüllung der Spritzgießmaschine ermöglicht dann eine Maschinenlaufzeit von 24h/Tag.

Das Granulat und die daraus hergestellten Produkte sind nicht für den Verzehr gedacht. Durch die Dichte des Materials sind die Produkte normalerweise sehr hart und es ist daher schwierig davon abzubeißen. Falls dennoch Teile ungewollt verzehrt werden oder etwa in den Verdauungstrakt eines Menschen oder Tieres gelangen, besteht jedoch durch die rein pflanzlichen und/oder natürlichen Rohstoffe kein gesundheitliches Risiko. Das Material wird vollständig abgebaut. Ein Verzehr des hierin offenbarten Granulats oder der daraus hergestellten Gebrauchsgegenstände ist auch in großen Mengen nicht gesundheitsgefährdend und wird vom Organismus rückstandslos ausgeschieden.

### V. Abbildungen

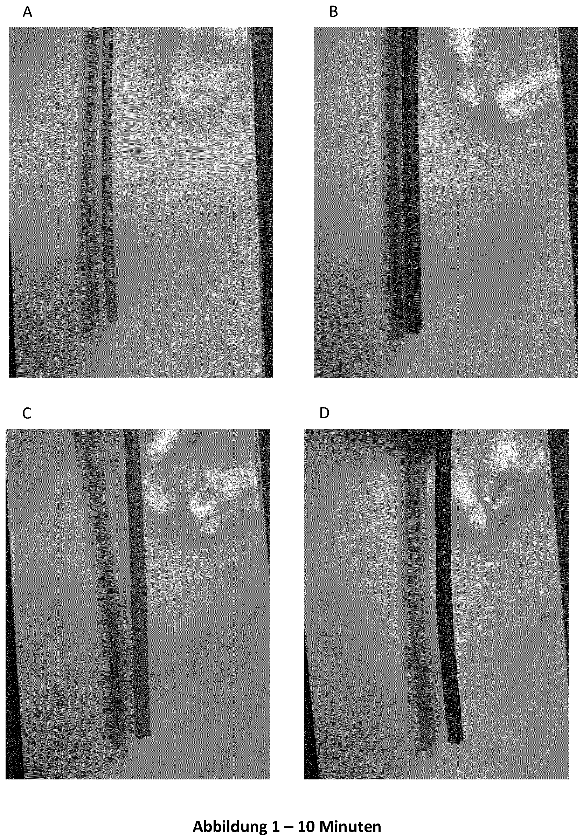

**Abbildung 1****:** Verschiedene Trinkhalme wurden 10 min in lauwarmes Wasser gestellt, danach herausgeholt und fotografiert. **A:** Pasta-Straw, Trinkhalm aus Nudelteig umfassend Weizenmehl; **B:** Wisefood Staw, Trinkhalm der Firma Wisefood umfassend Getreide und Apfelschale; **C:** Rice Straw, Trinkhalm umfassend Reismehl; **D:** Bao-Straw, Trinkhalm hergestellt aus hierin beschriebenem Granulat.

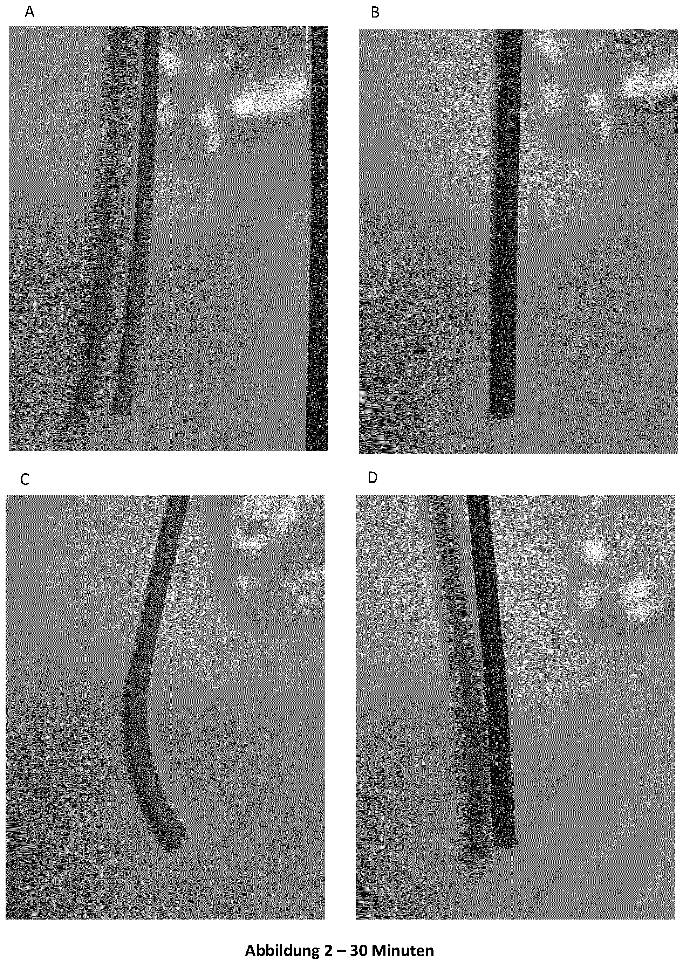

**Abbildung 2****:** Verschiedene Trinkhalme wurden 30 min in lauwarmes Wasser gestellt, danach herausgeholt und fotografiert. **A:** Pasta-Straw, Trinkhalm aus Nudelteig umfassend Weizenmehl; **B:** Wisefood Staw, Trinkhalm der Firma Wisefood umfassend Getreide und Apfelschale; **C:** Rice Straw, Trinkhalm umfassend Reismehl; **D:** Bao-Straw, Trinkhalm hergestellt aus hierin beschriebenem Granulat.

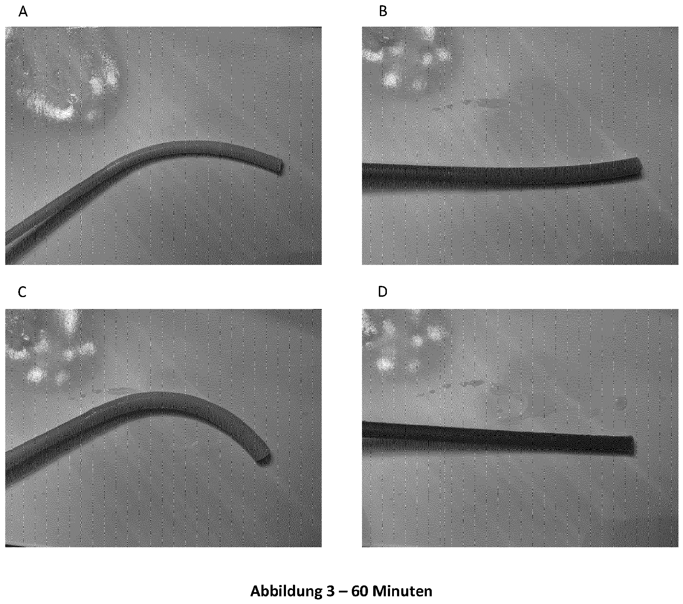

**Abbildung 3****:** Verschiedene Trinkhalme wurden 60 min in lauwarmes Wasser gestellt, danach herausgeholt und fotografiert. **A:** Pasta-Straw, Trinkhalm aus Nudelteig umfassend Weizenmehl; **B:** Wisefood Staw, Trinkhalm der Firma Wisefood umfassend Getreide und Apfelschale; **C:** Rice Straw, Trinkhalm umfassend Reismehl; **D:** Bao-Straw, Trinkhalm hergestellt aus hierin beschriebenem Granulat.

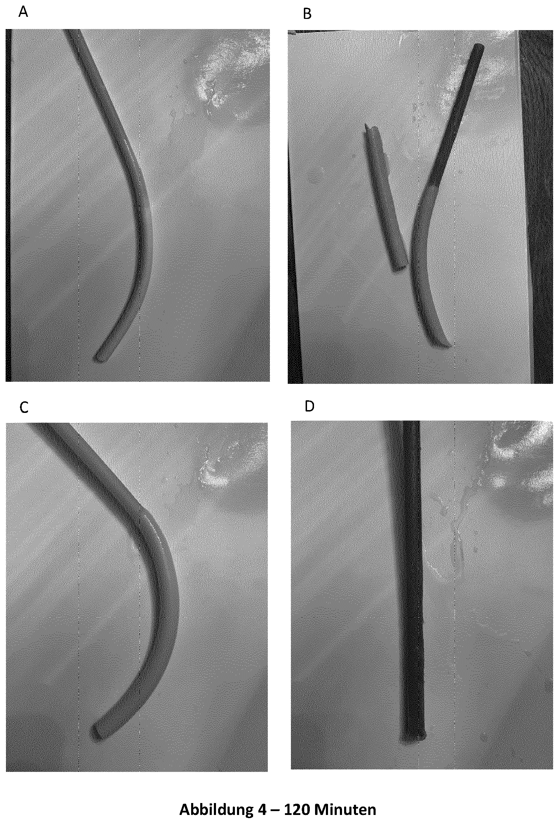

**Abbildung 4****:** Verschiedene Trinkhalme wurden 120 min in lauwarmes Wasser gestellt, danach herausgeholt und fotografiert. **A:** Pasta-Straw, Trinkhalm aus Nudelteig umfassend Weizenmehl; **B:** Wisefood Staw, Trinkhalm der Firma Wisefood umfassend Getreide und Apfelschale; **C:** Rice Straw, Trinkhalm umfassend Reismehl; **D:** Bao-Straw, Trinkhalm hergestellt aus hierin beschriebenem Granulat.

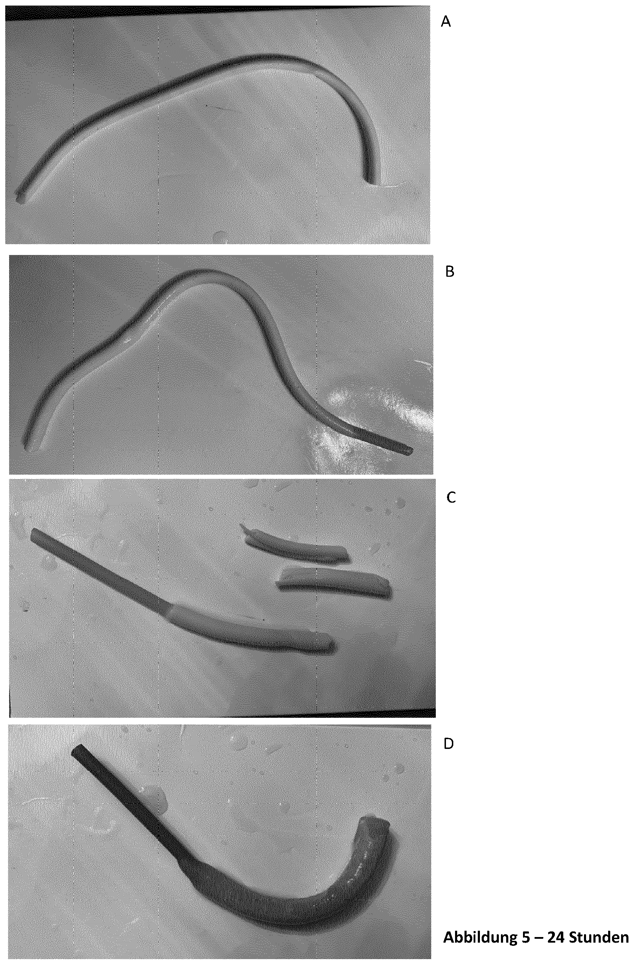

**Abbildung 5****:** Verschiedene Trinkhalme wurden 24 Stunden in lauwarmes Wasser gestellt, danach herausgeholt und fotografiert. **A:** Pasta-Straw, Trinkhalm aus Nudelteig umfassend Weizenmehl; **B:** Wisefood Staw, Trinkhalm der Firma Wisefood umfassend Getreide und Apfelschale; **C:** Rice Straw, Trinkhalm umfassend Reismehl; **D:** Bao-Straw, Trinkhalm hergestellt aus hierin beschriebenem Granulat.

### VI. Detaillierte Beschreibung

### Definitionen

**"Pflanzliche Stärke"** bezieht sich auf jegliche aus Pflanzenmaterial gewonnene Stärke. Die Stärke kann dabei etwa aus Wurzeln, Rüben, Knollen, Rhizomen, Sprossachsen, Blättern, Früchten oder Samen gewonnen werden. Beispielhaftes pflanzliche Stärken sind Weizenstärke, Kartoffelstärke, Maisstärke, Reisstärke oder Tapiokastärke; Stärke aus Maniok (*Manihot esculenta*), Knollenbohne (*Pachyrhizus tuberosus*), Batate (*Ipomoea batatas*), Yamswurzel (*Dioscorea spec*.), Knollen-Platterbse *(Lathyrus tuberosus),* Arakacha (*Arracacia xanthorrhiza*), Knolligem Sauerklee (*Oxalis tuberosa*), Knolliger Kapuzinerkresse (*Tropaeolum tuberosum),* Ulluco *(Ullucus tuberosus),* Ostindischer Pfeilwurz (*Tacca leontopetaloides*), Pfeilwurz (*Maranta spec*.), Achira (*Canna indica*), Taro (*Colocasia esculenta*), Tannia (*Xanthosoma sagittifolium*), Weißer Seerose *(Nymphaea alba*), Gelber Teichrose (*Nuphar lutea)* oder Chayote (*Sechium edule*).

**"Pflanzliche Fasern"** bedeutet aus Pflanzen gewonnene Fasern wie Strohfasern oder Grasfasern. Die pflanzlichen Fasern können mit einer Faserlänge von 0,5-3.8mm im Granulat vorliegen. Bevorzugt haben die Fasern eine Länge von 0,7-1,1mm.

**"Zellstoff"** bezeichnet die beim chemischen Aufschluss von Pflanzen, v.a. Holz, entstehende faserige Masse. Sie besteht zu einem Großteil aus Cellulose. Für Trinkhalme wird bevorzugt Zellstoff mit kurzen Fasern verwendet. Zellstoff kann mit einer Faserlänge von 0,5-3.8mm im Granulat vorliegen. Bevorzugt haben die Fasern eine Länge von 0,7-1,1mm. Der Zellstoff kann von vielerlei Pflanzen stammen, etwa von Nadelbäumen, Laubbäumen oder Bambus. In besonders bevorzugten Ausführungsformen ist der Zellstoff zumindest teilweise aus Baobab-Pflanzenmaterial hergestellt. In einer anderen besonders bevorzugten Ausführungsform ist der Zellstoff zumindest teilweise aus Bambus-Pflanzenmaterial hergestellt.

**"Holzstoff"** bezeichnet die bei mechanischem Aufschluss von Pflanzen, v.a. Holz, entstehende faserige Masse. Holzstoff enthält, anders als Zellstoff für höherwertige Papiere, große Anteile an Lignin. Für das Granulat wird bevorzugt Holzstoff mit kurzen Fasern verwendet. Holzstoff kann mit einer Faserlänge von 0,5-3.8mm im Granulat vorliegen. Bevorzugt haben die Fasern eine Länge von 0,7-1,1mm. Eine Kombination aus Holzstoff und Zellstoff kann zum Einsatz kommen.

**"Natur-Fasern"** ist ein genereller Ausdruck und umfasst pflanzliche Fasern, Zellstoff und Holzstoff.

**"Pflanzliche Dickungsmittel"** und **"pflanzliche Geliermittel"** sind Dickungs- und Geliermittel aus pflanzlichen oder bakteriellen Ressourcen. Bevorzugt sind Dickungs- und Geliermittel aus pflanzlichen Ressourcen. Sie bewirken die Gelierung von Flüssigkeit. Beispielhafte pflanzliche Dickungs- oder Geliermittel sind Agar-Agar, Pektin, Carrageen, Alginate, Johannisbrotkernmehl, Guarkernmehl, Sago, Xanthan, Gummi Arabicum, Reismehl, Hartweizenmehl oder Hartweizengrieß.

**"Guarkernmehl"** (auch als Lebensmittelzusatzstoff E 412) ist ein pflanzliches Dickungs- oder Geliermittel. Es wird aus gemahlenen Samen der Guarpflanze gewonnen. Besonders hervorzuheben ist, dass Guarkernmehl die Wirkung anderer pflanzlicher Verdickungs- oder Geliermittel erheblich verstärkt und daher gerne mit anderen pflanzlichen Verdickungs- oder Geliermitteln eingesetzt wird.

**"Xanthan"** (auch als Lebensmittelzusatzstoff E 415), oder "Xanthan Gum", ist ein bakterielles Dickungs- und Geliermittel. Es wird durch Bakterien der Gattung *Xanthomonas* aus zuckerhaltigen Substraten hergestellt. Bevorzugt stammt das Xanthan von Bakterien der Spezies *Xanthomonas campestris.* Alternativ zu Xanthan kann Teufelszunge verwendet werden.

**"Teufelszunge"** (*Amorphophallus Konjac*) (auch als Lebensmittelzusatzstoff E 425) ist eine Pflanzenart aus der Gattung der Titanwurzel. Die Knolle dieser Pflanze wird Konjakwurzel genannt. Das Mehl der Knolle zeigt hervorragende filmbildende Eigenschaften und wird hydratisierend, es ist grau gefleckt und geschmacksneutral. Im Gegensatz zu herkömmlicher Gelatine löst sich Konjak nicht schnell auf. Die Zugabe von Teufelszunge oder Xanthan sind vorteilhaft für die Viskosität der Masse und verleihen dieser eine hervorragende Fließeigenschaft bei der Herstellung des Granulats aber auch der Weiterverarbeitung des Granulats zu Produkten.

**"Agar-Agar"** bezeichnet ein aus Algen gewonnenes Galaktose-Polymer. Agar-Agar wird aus den Zellwänden von Algen, insbesondere von Rotalgen gewonnen.

**"Pektin"** (auch als Lebensmittelzusatzstoff E 440a oder E 440b) bezeichnet pflanzliche Polysaccharide, die im Wesentlichen α-1-4-glycosidisch verknüpfte Galacturonsäuren umfassen. Sie können zum Beispiel aus Schalen von Äpfeln, Zitronen und anderen Früchten gewonnen werden. Pektin ist ein pflanzliches Dickungs- oder Geliermittel und sorgt so dafür, dass Flüssigkeiten gelieren.

**"Carrageen"** (auch als Lebensmittelzusatzstoff E 407) ist ein pflanzliches Dickungs- oder Geliermittel, das aus verschiedenen Rotalgenarten gewonnen wird.

**"Alginat"** ist ein pflanzliches Dickungs- oder Geliermittel und besteht aus Salzen der Alginsäure. Es kann aus getrockneten und gemahlenen Braunalgen extrahiert werden. Je nach Salz ist es unter den E-Nummern E 401, E 402, E 403, E 404 und E 405 bekannt.

**"Johannisbrotkernmehl"** (auch als Lebensmittelzusatzstoff E 410) ist ein pflanzliches Dickungs- oder Geliermittel, das aus Johannisbrotbaumsamen durch Mahlen gewonnen wird. Das erhaltene Mehl ist weiß und geschmacksneutral.

**"Sago"** ist ein pflanzliches Dickungs- oder Geliermittel. Sago wird aus dem stärkereichen Mark verschiedener Pflanzenarten wie der Sagopalme, Maniok, oder Kartoffeln gewonnen. Häufig wird es als Granulat in Form kleiner Kügelchen angeboten. Sago quillt in heißer Flüssigkeit etwa um das Dreifache auf und wirkt beim Abkühlen stark bindend. Damit die Flüssigkeit nicht breiig wird, wird Sago nur so lange gekocht oder eingeweicht, bis die Kügelchen weich sind, aber noch ihre Form behalten.

**"Gummi arabicum"** (auch als Lebensmittelzusatzstoff E 414) ist ein pflanzliches Dickungs- und Geliermittel, das aus dem harzigen Pflanzensaft von in Afrika beheimateten Akazienarten, wie beispielsweise *Acacia senegal,* gewonnen wird. Gummi arabicum kann sowohl in Pulver- als auch in Gummiform vorliegen.

**"Reismehl"** ist ein pflanzliches Dickungs- und Geliermittel, das durch Entspelzen von Reiskörnern und anschließendes feines Mahlen entsteht. Je nach Verwendung von poliertem oder unpoliertem (braunen) Reiskörnern, erhält man weißes oder braunes Reismehl.

**"Hartweizenmehl"** ist ein pflanzliches Dickungs- und Geliermittel, das aus dem Hartweizen (*Triticum durum*) gewonnen wird, der auch unter Durum, Durumweizen oder Glasweizen bekannt ist. Die Hartweizenkörner werden geschält und anschließend mehrmals gemahlen, sodass Hartweizenmehl entsteht.

**"Hartweizengrieß"** ist ein pflanzliches Verdickungsmittel, das aus dem Hartweizen (*Triticum durum*) gewonnen wird, der auch unter Durum, Durumweizen oder Glasweizen bekannt ist. Wie bei der Hartweizenmehl-Herstellung werden die Hartweizenkörner geschält und anschließend gemahlen. Allerdings werden die Hartweißenkörner weniger häufig gemahlen als bei der Herstellung von Hartweizenmehl, so dass Hartweißengrieß eine gröbere Partikelstruktur aufweist.

**"Wachs"** bezeichnet jegliches in der Natur vorkommendes Wachs, wie etwa Carnaubawachs, Bienenwachs oder Sojawachs. Bevorzugt ist Rapswachs, Sojawachs oder Carnaubawachs. **"Carnaubawachs"** wird aus dem Blatt der Carnaubapalme (*Copernicia prunifera*) gewonnen. Die Blätter werden geerntet, durch Trocknen und mechanisches Einwirkung wird das Wachs abgetrennt. Das Wachs kommt in diversen Industrien zum Einsatz, wie in der Lebensmittel-, Kosmetik- und Pharma-Industrie. Unbehandeltes Carnaubawachs hat eine helle gelbliche, grünliche bis dunkelgraue Farbe, es ist von Luftbläschen durchsetzt, hart, spröde und wasserunlöslich. Carnaubawachs ist das härteste natürliche Wachs mit dem höchsten Schmelzpunkt von über 80 °C. Außerdem ist es verzehrbar, liegt also natürlich in Lebensmittelqualität vor und hat einen milden Geschmack. Dies ist von Vorteil, da das Granulat und die daraus gewonnenen Produkte keinen Eigengeruch aufweisen. Außerdem gestaltet die Zugabe von Carnaubawachs zu den Stoffen im Granulat umfassend pflanzliche Stärke und Dickungs- und/oder Geliermittel den Verarbeitungsprozess der Stoffe leichtgängiger, trägt aber auch zu Festigkeit, Härte und Resistenz des Granulats und daraus entstehenden Produktes bei. Carnaubawachs kommt bevorzugt in Pulverform zur Anwendung. **"Sojawachs"** wird aus reifen Sojabohnen (*Glycine max*) gewonnen. Die Sojabohnen werden geerntet und zunächst wird Sojaöl gewonnen. Dieses wird hydriert, unter Druck von ca. 200 bar und Temperaturen von etwa 140°C - 225 °C in der Anwesenheit eines metallischen Katalysators erhält man Sojawachs. Das Wachs kommt in diversen Industrien zum Einsatz, wie in der Kosmetik- und Kerzen-Industrie. Unbehandeltes Sojawachs hat eine sehr helle, cremeweiße, manchmal gelbliche Farbe, ist hart, spröde und wasserunlöslich. Sojawachs hat einen Schmelzpunkt von etwa 50 °C. Außerdem ist es verzehrbar und hat einen milden Geschmack. Dies ist bei Granulat und den daraus erhaltenen Produkten von Vorteil, da diese so keinen Eigengeruch aufweisen. Außerdem gestaltet die Zugabe von Sojawachs zu den Stoffen im Granulat umfassend pflanzliche Stärke und Dickungs- und/oder Geliermittel den Verarbeitungsprozess der Stoffe leichtgängiger, trägt aber auch zu Festigkeit, Härte und Resistenz des Granulats und daraus entstehenden Produktes bei. Sojawachs kommt bevorzugt in Pulverform zur Anwendung. Dem vorstehenden Wachs können optional Biopolymere wie Naturkautschuk beigefügt werden. **"Rapswachs"** wird aus den Samen vom Raps (*Brassica napus*) oder auch von dem nahen Verwandten Ölrübsen (*Brassica rapa subsp. oleifera*) gewonnen. Die Samen werden geerntet und zunächst wird Rapsöl gewonnen. Durch die Härtung von Rapsöl wird Rapswachs gewonnen. Der Schmelzpunkt von Rapswachs liegt bei etwa zwischen 57°C und 61°C. Auch Rapswachs ist verzehrbar und hat die für Caunaubawchs und Sojawachs beschriebenen vorteilhaften Eigenschaften.

**"Biopolymer"** ist ein Polymer, das auf pflanzlichen Rohstoffen basiert und biologisch abbaubar ist. Ein beispielhaftes Biopolymer ist Naturkautschuk, auch Gummi elasticum oder Resina elastica genannt. Naturkautschuk bietet eine höhere Resistenz gegen Wasser als Wachse. Daher ist Naturkautschuk selbst oder Mischungen davon besonders vorteilhaft bei der Herstellung eines Endprodukts aus Granulat. Naturkautschuk kann entweder im Granulat selbst enthalten sein, aber auch als Bestandteil einer Beschichtung eines aus Granulat hergestellten Gebrauchsgegenstands dienen. Dies ist vorteilhaft bei Produkten die mit Flüssigkeiten in Berührung kommen wie Trinkhalmen. Naturkautschuk wird in Form von Naturlatex / Naturlatexmilch verwendet, alternativ in Form einer Emulsion basierend auf Naturkautschuk und Wasser mit einem Feststoffgehalt von 40-65%, bevorzugt 50-60%, am bevorzugtesten 60% Kautschuk. Ferner umfassen die Biopolymere auf pflanzlicher Basis Zelluloid, Zellophan, Vulkanfiber auf Zellulosebasis, Zellulosenitrat, Zellulosepropionat und Zelluloseacetatbutyrat, Stärkeblends und nachwachsende Rohstoffe wie Lignin, Chitin, Casein, pflanzliche Gelatine. Ferner zählen Pflanzenöle wie Rizinusöl zu den Biopolymeren. Es ist darauf hinzuweisen, dass in der vorliegenden Beschreibung "Biopolymer" nicht mit "Biokunststoff", "Bioplastik" und ähnlichen chemisch verarbeiteten Polymeren gleichgesetzt wird.

**"Emulsion"** bezeichnet jegliches verteilte Gemisch mehrerer Bestandteile, wie beispielsweise einem oder mehrere Feststoffe und einem Lösungsmittel wie Wasser. Eine Emulsion kann eine Wachsemulsion oder Kautschukemulsion sein. Eine Emulsion umfasst Carnaubawachs, Kautschuk und Wasser. Auch Naturlatex ist eine Emulsion aus Kautschuk und Wasser.

**"Öl"** bezeichnet jegliches pflanzliche, mineralische oder tierische Öl. Bevorzugt ist das Öl ein pflanzliches Öl. Besonders bevorzugt sind Rapsöl, Nussöl und Sonnenblumenöl.

**"Kompostierbar"** bezeichnet die Eigenschaft eines Materials, nach 6 Monaten unter definierten aeroben Bedingungen zu 90% abgebaut zu werden. Die Kompostierbarkeit eines Materials kann nach DIN EN 13432, Version 2000-12, bestimmt werden. Kompostierbarkeit betrifft hierin sowohl die industrielle Kompostierung als auch die nicht-industrielle Kompostierung durch rein biologische Zersetzung bzw. Verrottung (Heimkompostierung). So ist das hierin beschriebene Granulat und die daraus gewonnenen Produkte sowohl mittels Intensivrotte als auch mittels Trockenvergärung innerhalb von 4-8 Wochen, bevorzugt innerhalb 4 Wochen kompostierbar, sodass sich das Granulat und die Produkte innerhalb dieser Zeit vollständig aufgelöst haben.

**"Gartenkompostierbar"** bezeichnet die Eigenschaft eines Materials nur durch Einwirkung der Atmosphäre, zum Beispiel auf einem Komposthaufen vollständig abbaubar zu sein.

**"Ultrakompostierbar"** bezeichnet die Eigenschaft eines Materials nur durch Einwirkung der Atmosphäre, zum Beispiel auf einem Komposthaufen innerhalb von 50 Tagen vollständig abbaubar zu sein.

**"Biologisch abbaubar"** bezeichnet die Charakteristik eines Prozesses, einen organischen Stoff biologisch, das heißt durch Lebewesen oder ihre Enzyme, vollständig abzubauen. Dabei findet der Abbau des Stoffes unter aeroben Bedingungen in höchstens 10 Jahren, bevorzugt in 5 Jahren, noch bevorzugter in 1 Jahr statt.

**"Recycelbar"** heißt, dass das Material nach seiner Verwendung (etwa als Trinkhalm) durch einen Aufarbeitungsprozess (Recycling) als Material zur Herstellung eines neuen, nicht zur Verbrennung gedachten Produkts verwendet werden kann. Zum Beispiel können hierin beschriebene, aus Granulat hergestellte Produkte nach ihrer Verwendung zerkleinert als Rohmaterial bei der Herstellung von recyceltem Granulat dienen. Ferner können Reste im Herstellungsprozess zerkleinert und recycelt werden (sog. Hackgut oder Hackschnitzel). Dies steht im Gegensatz zu Materialien, die nach ihrer Verwendung entweder durch Verbrennung verwertet oder dauerhaft deponiert werden müssen.

**"Magnesiumstearat"** Magnesiumstearat ist das Magnesiumsalz der Stearinsäure und gehört zu den Kalkseifen. Es wird aus Fetten und Ölen unter Spaltung ihrer Glyceride mittels Magnesium, Seifen und Glycerin gewonnen. Magnesiumstearat wird zum Beispiel in der pharmazeutischen Industrie als Hilfsmittel zur Tabletten- oder Granulatherstellung verwendet. Magnesiumstearat wird auch in einigen Süßigkeiten verwendet. Magnesiumstearat kann sowohl aus Fetten tierischer als auch pflanzlicher Herkunft hergestellt werden. Oft wird Soja-, Raps- oder Maiskeimöl verwendet. Die Substanz ist auch nützlich, weil sie schmierende Eigenschaften aufweist, die verhindern, dass Inhaltsstoffe während der Komprimierung von chemischen Pulvern zu festen Tabletten an den Herstellungsgeräten haften bleiben. Magnesiumstearat ist das am häufigsten verwendete Gleitmittel für Tabletten. Bei der Herstellung gepresster Bonbons wirkt Magnesiumstearat als Trennmittel und wird zum Binden von Zucker in Hartbonbons wie Minzen verwendet. Magnesiumstearat wird allgemein als Schmiermittel in einer Konzentration zwischen 0,25% und 5,0% in der Herstellung von Tabletten, Kapseln und anderen oralen Darreichungsformen verwendet. Aufgrund seiner langjährigen Verwendung als Hilfsstoff in der Pharma-, Lebensmittel- und Kosmetikindustrie ist die Sicherheit von Magnesiumstearat gut dokumentiert.

**"Calciumstearat"** Calciumstearat wird zur Herstellung sogenannter non-tox Stabilisatoren von Kunststoffen, bevorzugt in Verbindung mit Zinkstearat, aber auch Bariumstearat oder Magnesiumstearat verwendet. Weiterhin dient es als Gleitmittel in pharmazeutischen Produkten und als Schmierstoff (Staufferfett) in der Papier- und Metall-verarbeitenden Industrie, als Hydrophobierungsmittel für Baustoffe sowie in der Sandaufbereitung. Technisches Calciumstearat wird durch Reaktion von Calciumchlorid mit dem Natriumsalz der Stearinsäure (meist verunreinigt mit dem Natriumsalz der Palmitinsäure) und anschließendes Auswaschen von Natriumchlorid gewonnen. Es ist ein Imprägniermittel für Textilien. In Kunststoffen kann es als Säurefänger oder Neutralisator in Konzentrationen von bis zu 1000 ppm, als Schmiermittel und als Trennmittel wirken. Es kann in plastischen Farbmittelkonzentraten verwendet werden, um die Pigmentbenetzung zu verbessern. In Hart-PVC kann es die Verschmelzung beschleunigen, den Fluss verbessern und das Anschwellen des Stempels verringern. Zu den Anwendungen in der Körperpflege- und Pharmaindustrie gehören Tablettenformtrennmittel, Antihaftmittel und Geliermittel. Calciumstearat ist Bestandteil einiger Arten von Entschäumern. Außerdem ist Calciumstearat ein Antibackmittel, welches die feie Beweglichkeit von Feststoffen ermöglicht und so das Zusammenbacken pulverförmiger Bestandteile verhindert. Bei der Papierherstellung wird Calciumstearat als Schmiermittel verwendet, um einen guten Glanz zu erzielen, und um Staubbildung und Faltenrisse bei der Papier- und Kartonherstellung zu verhindern. Eine Zugabe von etwa 0,1 bis 10% ist möglich.

**"Zinkstearat"** ist ein weißes Pulver mit einem Schmelzpunkt von 130°C, einem Flammpunkt von 277°C und einer Selbstentzündungstemperatur von 420°C. Die Molekülmasse beträgt 632,3 g/mol. Zinkstearat ist nicht wasserlöslich. Zinkstearat wird als Stabilisator für Emulsionen verwendet. In der Kartenmagie verwendet man Zinkstearat als Kartenpuder, welches die Gleitfähigkeit von Spielkarten verbessert. Zinkstearat wird auch als Schmierstoff bei der Kunststoffverarbeitung verwendet. Es verhindert ein Festsitzen von Polyamidteilen untereinander und ist ein Hilfsmittel bei Plastifizierproblemen. Wenn die Plastifizierschnecke das Material nicht richtig einzieht, kann dies durch Zugabe von ca. 0,2% Zinkstearat verbessert werden, besonders bei Polyamid 6.0. Wenn die Plastifizierschnecke das Material nicht richtig einzieht, kann dies durch Zugabe von ca. 0,2 % Zinkstearat verbessert werden.

**"Glycerin"** Glycerin ist der Trivialname und die gebräuchliche Bezeichnung von Propan-1,2,3-triol und wird bevorzugt als Flüssigkeit (als Lösung, bevorzgt als eine 100%ige Lösung) verwendet, kann aber auch als Feststoff verwendet werden. Glycerin wird vorliegend als Schmiermittel und Feuchthaltemittel eingesetzt. Bevorzugt ist E 422. E 422 wird überwiegend aus pflanzlichen Fetten und Ölen gewonnen. Die Herstellung aus synthetischen oder tierischen Stoffen ist ebenfalls möglich. Bevorzugt ist "vegetarisches Glycerin" oder "veganes Glycerin", welches durch die Umesterung von pflanzlichen Ölen hergestellt wird. Als Lebensmittelzusatzstoff ist E 422 für alle Nahrungsmittel allgemein zugelassen und es existiert auch keine Höchstmengenbeschränkung für die Verwendung von Glycerin. Die Zugabe von Glycerin erhöht die Beweglichkeit des Materials. Als eine Alternative zu Glycerin kann auch Sorbit verwendet werden.

**"Sorbit"** ist ein natürlicher Weichmacher und wird als Plastifizierungsmittel eingesetzt. Die industrielle Herstellung erfolgt aus Glucose (Traubenzucker), die aus Mais- und Weizenstärke gewonnen wird; die Glucose wird anschließend durch katalytische Hydrierung zu Glucitol umgesetzt. Wie bei allen Produkten, die über die Stärkeverzuckerung in Europa erzeugt werden, sind bei Sorbit keine gentechnischen Produkte auf dem Markt, wobei zur Herstellung von Sorbit der Einsatz gentechnisch veränderter Organismen möglich wäre. Sorbit wird als Schmiermittel und Feuchthaltemittel eingesetzt. Bevorzugt ist E 420. Auch bevorzugt ist "vegetarisches Sorbit" oder "veganes Sorbit". Als Lebensmittelzusatzstoff ist E 420 für alle Nahrungsmittel allgemein zugelassen. Die Zugabe von Sorbit erhöht die Beweglichkeit des Materials.

**"Hilfsstoffe"** sind Stoffe, die dem Granulat und daraus hergestellten Produkten weitere vorteilhafte Eigenschaften verleihen, beispielsweise hinsichtlich der Form, Herstellbarkeit, Stabilität. Hilfsstoffe umfassen beispielsweise Antioxidantien, Backpulver, Bindemittel, Emulgatoren, Stabilisatoren, Farbstoffe, Duftstoffe bzw. Geruchsneutralisatoren und/oder Glanzmittel. Diese Hilfsstoffe biologisch abbaubar. Geruchsneutralisatoren umfassen dabei Stoffe aus Vanille, Zitrone Lavendel oder Tanne.

**"Kautschuk"** betrifft Naturkautschuk vorliegend als Emulsion mit Wasser, sowie Naturlatex bzw. Naturlatexmilch, wie etwa Natur Latex Laguna der Firma Colok GmbH. Das Latex oder die Kautschukemulsion kann zusätzlich ein Trennmittel wie Struktol^{®} oder Ammoniak umfassen. Der bevorzugte Feststoffgehalt einer Kautschukemulsion liegt bei 60% Kautschuk. Naturlatex und Kautschukemulsion bezeichnen dieselbe Emulsion und sind austauschbar zu verstehen.

**"anti-stick Zusätze",** auch "Anti-sticking-Agents" oder "anti-tack Zusätze", bzw. "Anti-tack-Agents" verhindern das Aneinanderkleben von Granulatkörnern, können aber auch erst bei Verarbeitung des Granulats zu diversen Produkten optional dazugegeben werden. Die Termini sind dem Fachmann bekannt. Die genauen Zusammensetzungen solcher anti-stick bzw. anti-tack Zusätze sind Herstellerspezifisch. Anti-tack Zusätze kommen bevorzugt bei der Verwendung von Kautschukemulsion bzw. Latex zum Einsatz. Anti-stick Zusätze bzw. anti-tack Zusätze umfassen Öle, Glycerin, Sorbit, Lecithin, pflanzliche Fette und pflanzliche Stearate.

**"Restfeuchte"** beschreibt den Feuchtigkeitsanteil im fertigen Granulat oder daraus hergestellten Produkt. Eine Restfeuchte von beispielsweise 20% heißt, dass der Feuchtigkeitsanteil im fertigen Granulat noch 20% beträgt. Gemessen wird die Restfeuchte mittels eines elektronischen Feuchteindikators wie etwa mit einem Holzfeuchtemessgerät.

Angaben in % verstehen sich als Massenanteil bzw. Gewichtsprozent (Gew.-%), außer es ist ausdrücklich etwas anderes angegeben. Falls beispielsweise eine Mischung aus welcher Granulat hergestellt wird aus 50% Stärke und 50% Dickungs- und/oder Geliermittel besteht, dann besteht eine Mischung mit einem Gewicht von 1000g aus 500g Stärke und 500g Dickungs- und/oder Geliermittel. Falls zu dieser Mischung (1000g) bezogen auf das Gesamtgewicht der Mischung 70% Wasser hinzugegeben werden, werden 700g Wasser hinzugegeben.

Jegliche Zusätze und Bestandteile sind für die Verwendung in Lebensmitteln zugelassen und basieren auf rein pflanzlicher oder natürlicher Basis.

### Biologisch abbaubares und kompostierbares Granulat

Hierin beschrieben wird ein biologisch abbaubares und kompostierbares Granulat, umfassend pflanzliche Stärke und pflanzliches Dickungs- und Geliermittel mit optionaler Veredelung durch Zusatz weiterer pflanzlicher und/oder natürlicher Rohstoffe. Das Granulat kann dabei 40-60% Stärke und 40-60% Dickungs-und/oder Geliermittel enthalten, zudem optional 0-20% natürliche Zusätze wie Fasern, Konservierungsstoffe, Öle, Wachse, Stearate, Glycerin, Farbstoffe, Aromen, Geschmäcker, Duftstoffe und weitere der hierin beschriebenen Zusätze. Bevorzugt umfasst das Granulat einen Feststoffanteil (% = Gew.-%) aus 40-50% Stärke, 40-50% Dickungs- und/oder Geliermittel und 0-20% weitere Bestandteile. Mehr bevorzugt umfasst das Granulat einen Feststoffanteil bestehend aus 45-50% Stärke, 45-50% Dickungs- und/oder Geliermittel und 0-10 % weitere Bestandteile. Das Verhältnis von Stärke zu Dickungs- und/oder Geliermittel im Granulat beträgt bevorzugt 1:1. Stärke und Dickungs- und/oder Geliermittel liegen daher bevorzugt zu gleichen Teilen vor. Dieses Verhältnis bleibt bevorzugt auch bei optionaler Veredelung durch Beimischung weiterer pflanzlicher und/oder natürlicher Bestandteile bestehen. Das Granulat hat zudem eine Restfeuchte von 10-30%, bevorzugt von 15-22%, noch bevorzugter von 19-20%.

Die pflanzliche Stärke enthaltend im Granulat ist eine native/natürliche, nicht behandelte Stärke umfassend Weizenstärke, Kartoffelstärke, Maisstärke, Reisstärke, Tapiokastärke oder Stärke aus Maniok, Knollenbohne, Batate, Yamswurzel, Knollen-Platterbse, Arakacha, Knolliger Sauerklee, Knollige Kapuzinerkresse, Ulluco, Ostindischer Pfeilwurz, Pfeilwurz, Achira, Taro, Tannia, Weiße Seerose, Gelbe Teichrose oder Chayote oder eine Mischung davon. Bevorzugt ist die pflanzliche Stärke enthaltend im Granulat Weizenstärke, Kartoffelstärke, Maisstärke, Tapiokastärke oder eine Mischung davon, besonders bevorzugt ist Weizenstärke.

Das pflanzliche Dickungs- und/oder Geliermittel enthaltend im Granulat umfasst Guarkernmehl, Xanthan (Xanthan Gum), Agar-Agar, Pektin, Carrageen, Alginat, Johannisbrotkernmehl, Sago, Gummi Arabicum, Reismehl, Hartweizenmehl oder Hartweizengrieß oder eine Mischung davon. Bevorzugt ist das Dickungs-und/oder Geliermittel enthaltend im Granulat eine Mischung aus Guarkernmehl und Xanthan. Der Anteil an Dickungs- und/oder Gelierungsmittel beeinflusst die Erscheinung des Granulats und der daraus erzeugten Produkte. Die Zugabe von Dickungs- und/oder Gelierungsmittel kann den Grad an Transparenz des Produkts beeinflussen. Zudem kann der Anteil an Dickungs- und/oder Gelierungsmittel ebenfalls die Dichte des Materials beeinflussen. Je geringer der Anteil an Dickungs- und/oder Gelierungsmittel in der Mischung, desto höher ist die Quellfähigkeit des erzeugten Materials im Formungsprozess und entsprechend geringer ist die Dichte des Materials. Die Quellfähigkeit hängt aber auch mit der zugeführten Hitze während des Herstellungs- und Formungsprozesses zusammen. Somit kann ein Produkt unterschiedlicher Dichte erzeugt werden. Für ein Produkt mit geringer Dichte dafür aber mehr Lufträume aufweisend, ist bei der Einspritzung in die Herstellungsmaschine (Spritzguss) weniger Material nötig, da dieses sich in der Form ausdehnt. Das Produkt ähnelt in seiner Erscheinungsform Styropor. Im Gegensatz dazu weist ein Produkt mit einem höheren Anteil an Dickungs- und/oder Gelierungsmittel in der Mischung eine höhere Dichte auf. Entsprechend mehr Material wird dann in die Form eingespritzt, um ein Produkt mit plastikähnlichen Eigenschaften zu erzeugen.

Das Granulat weist bevorzugt eine Restfeuchte von 15-22%, noch bevorzugter von 19-20% auf. Eine höhere Restfeuchte im Granulat kann zu einer schmierigen Masse im weiteren Herstellungsprozess von aus dem Granulat hergestellten Produkten führen. Eine zu geringe Restfeuchte bewirkt, dass sich das Granulat-Material im weiteren Herstellungsprozess nicht vernetzt. Dadurch resultiert, dass sich das Material verzieht, sich nicht verdichtet und somit kein stabiles Produkt entsteht. Zudem wird keine glatte Oberfläche des Produktes erzeugt.

Ferner kann das Granulat einen oder mehrere der folgenden Zusätze (Veredelungen) enthalten.

Das Granulat kann zusätzlich pflanzliches Glycerin umfassen. Glycerin wird hierin als Lösung verwendet. Pflanzliches Glycerin weist wasserspeichernde Eigenschaften auf. Es wird als Feuchtigkeitsspender und Weichmacher verwendet. Durch die Zugabe von Glycerin kann die Flexibilität des Granulats und daraus hergestellter Produkte gesteigert werden. Als Alternative zu Glycerin kann Sorbit verwendet werden.

Das Granulat kann zusätzlich Zellstoff und/ oder Holzstoff umfassen. Dies erhöht die mechanische Stabilität und Bruchfestigkeit des Granulats und der daraus erzeugten Produkte und kann so das Abknicken, Splittern oder Zerreißen der Produkte verhindern. Das Granulat enthält bis zu 20% Zellstoff, Holzstoff oder pflanzliche Fasern. Ein höherer Gehalt würde die Weiterverarbeitung zu Produkten verkomplizieren, da die erzeugten Produkte zu spröde würden. Besonders gute mechanische Eigenschaften ergeben sich bei einem Gehalt von 4-10%. Im Vergleich zu Holzstoff hat Zellstoff den Vorteil, dass erzeugte Produkte eine höhere Transparenz aufweisen.

Das Granulat kann zusätzlich pflanzliche Fasern, wie Strohfasern und/oder Grasfasern umfassen. Wie Zellstoff oder Holzstoff erhöht auch die Zugabe pflanzlicher Fasern die mechanische Stabilität der daraus hergestellten Produkte. Im Vergleich zu Zellstoff haben pflanzliche Fasern wie auch bei Holzstoff den Vorteil, dass erzeugte Produkte eine höhere Stabilität aufweisen und für deren Herstellung weniger Chemikalien zum Einsatz kamen. Das Granulat der vorliegenden Erfindung erhält bis zu 20% pflanzliche Fasern. Fasern werden vorliegend in einer Länge von 0,5-3,8mm verwendet. Dabei ist eine Faserlänge von 0.7-1.1mm optimal. Längere Fasern können den Quellprozess des Granulats sowie die Vernetzung der Rohstoffe im Granulat bei der weiteren Verarbeitung des Granulats also beim Herstellen eines gewünschten Produktes verzögern oder ganz verhindern. Kürzere Fasern haben keinen Effekt auf eine erhöhte Stabilität des Endprodukts.

Die Härte und Flexibilität des Granulats bzw. des daraus hergestellten Produkts ist variabel. In manchen Ausführungsformen ist das Granulat bzw. Produkt hart. In manchen Ausführungsformen ist das Granulat bzw. Produkt leicht flexibel. In anderen Ausführungsformen ist das Granulat bzw. das Produkt starr. Durch die Zugabe von Glycerin oder eines oder mehrere von Zellstoff/Holzstoff/pflanzliche Fasern kann das Granulat bzw. Produkt jegliche gewünschte Stabilität/Flexibilität aufweisen. Ein Granulat umfassend Zellstoff und/oder Holzstoff und/oder Pflanzenfasern wird bevorzugt für die Herstellung eines sehr formstabilen und harten Gegenstandes verwendet, zum Beispiel zur Herstellung eines Kaffeebechers oder Kamms. Die Fasern verbessern deutlich die Stabilität und Reißfestigkeit des Produkts. Die Zugabe von Glycerin macht das Granulat bzw. daraus hergestellte Produkt weicher und flexibler.

Je niedriger der Anteil des pflanzliche Dickungs- und Geliermittel im Vergleich zu pflanzlicher Stärke, desto instabiler wird das erzeugte Produkt. Ab einem Stärkeanteil von über 70% nimmt der Quellgrad des Materials deutlich zu (siehe spezielle Ausführungsformen I und II). Somit ist bei einem Mindestanteil von 80% Stärke ein Faseranteil in der Mischung sehr bevorzugt, wobei die Fasern deutlich die Stabilität und Reißfestigkeit des Produkts verbessern.

Ferner kann das Granulat zusätzlich Wachs, bevorzugt Rapswachs, Sojawachs, Candelillawachs, Reiskleiewachs oder Carnaubawachs, am bevorzugtesten Rapswachs als Feststoff umfassen. Die Anwesenheit von Wachs im Granulat führt dazu, dass daraus hergestellte Produkte eine höhere Resistenz gegen Flüssigkeiten wie Wasser, Öle und Fette aufweist. Der Zusatz von Wachs im Granulat kann die Stabilität des Produkts beim Kontakt mit einer Flüssigkeit um mindestens 10%, mindestens 20%, mindestens 25%. mindestens 30% oder sogar mehr als 30% steigern. Das Granulat kann 1-10% Wachs, bevorzugt 5% Wachs, bevorzugt Rapswachs umfassen.

Das Granulat kann zusätzlich ein Biopolymer umfassen. Auch Biopolymere erhöhen die Resistenz der aus dem Granulat erzeugten Produkte gegenüber Wasser, Fett und Öl. Der Zusatz von höchst widerstandsfähigen Biopolymeren im Granulat kann die Stabilität des daraus hergestellten Produkts beim Kontakt mit einer Flüssigkeit um mindestens 10%, mindestens 20%, mindestens 25%, mindestens 100% oder sogar mehr als 100% steigern. Bevorzugtes Biopolymer ist Naturkautschuk. Zudem kann das Granulat daher zusätzlich auch Naturkautschuk/Naturlatex/Naturlatexmilch umfassen. Naturkautschuk kann auch als Hauptbestandteil einer Beschichtung der aus Granulat hergestellten Produkte dienen. Besonders aus Granulat hergestellte Trinkhalme profitieren von einer Beschichtung mit Naturlatex in Hinblick auf Langlebigkeit in Flüssigkeit.

Das Granulat kann zudem Öl, bevorzugt Nuss- oder Rapsöl umfassen. Öl verbessert die Fließeigenschaften der Rohmasse während der Herstellung zu Granulat als auch des Granulats während der Herstellung des Produkts.

Das Granulat kann zudem ein oder mehrere Konservierungsstoffe enthalten. Durch Beimischen von Konservierungsstoffen zum Material des Granulats kann einem Schimmeln des erzeugten Granulats oder Produkts entgegengewirkt werden. Konservierungsstoffe umfassen E 220 Schwefeldioxid/schweflige Säure, E 221 Natriumsulfit, E 222 Natriumhydrogensulfit, E 223 Natriumdisulfit, E 224 Kaliumdisulfit, E 226 Calciumsulfit, E 227 Calciumhydrogensulfit, E 228 Kaliumhydrogensulfit oder eine Mischung davon. Diese Konservierungsstoffe sind als Lebensmittel Zusatzstoffe gelistet, die neben den klassischen Eigenschaften eines Konservierungsstoffs zudem auch dem Abbau von optional im Granulat vorhandenen Farbstoffen, Vitaminen, Duftstoffen und Aromen durch Sauerstoffeinfluss entgegenwirken. Somit bleibt die allgemeine Haltbarkeit des Granulats sowie des daraus hergestellten Produkts länger erhalten.

Ferner kann das Granulat zusätzlich Essig und/oder Lecithin umfassen. Essig und Lecithin werden als Bindemittel der Inhaltsstoffe des Granulats verwendet. Die einzelnen Inhaltsstoffe des Granulats können also durch Zugabe von Essig und Lecithinen besser und homogener miteinander verbunden werden.

Das Granulat kann zusätzlich ein pflanzliches Stearat wie Magnesiumstearat, Calciumstearat, Zinkstearat und/oder Aluminiumtristearat umfassen. Magnesiumstearat, Calciumstearat, Zinkstearat und Aluminiumtristearat werden als Gleit- oder Schmiermittel verwendet. Das Granulat bzw. Produkte aus diesem sind somit weniger adhärent und lassen sich leichter z.B. aus Gussformen lösen. Eines oder mehrere der Stearate können zu 0,1-10% des Materials des Granulats ausmachen. In manchen Ausführungsformen umfasst das Granulat bevorzugt zwischen 0,4 und 8 % Magnesiumstearat, 0,16% Calciumstearat, 0,32% Zinkstearat und/oder 1,6% Aluminiumtristearat.

Optional kann zudem die Farbe des Granulats mittels herkömmlicher Lebensmittelfarbe, modifiziert werden. Ferner optional kann der Geruch des Granulats durch Zufügen herkömmlicher Aromen, bevorzugt ätherischer Öle modifiziert werden.

Die Form der Granulat-Stücke ist variabel. Das Granulat kann zum Beispiel dropsförmig, linsenförmig, zylindrisch oder perlenförmig, aber auch flockenförmig (Flakes) sein. Der Durchmesser der Granulat-Stücke ist variabel. Der Durchmesser der Granulat-Stücke kann 1-5 mm sein. In bevorzugten Ausführungsformen ist der Durchmesser des Granulats 3-5 mm. Beispielhafte Durchmesser der einzelnen Granulat-Stücke sind 1 mm, 1,5 mm, 2 mm, 2,5 mm, 3 mm, 3,5 mm, 4 mm, 4,5 mm, 5mm. Durch einen gewissen Durchmesser der Granulat-Stücke soll eine Staubbildung vermieden werden welche aber durch die Dichte des Materials und die Restfeuchte ohnehin sehr gering ausfällt und normalerweise nicht vorkommt.

Das Granulat kann je nach gewünschtem Produkt zum Spritzgießen oder für die Extrusion verwendet werden. In beiden Fällen wird es in einem Schneckenkanal befindlich in einem beheizbaren Zylinder durch Scherung der Schnecke und durch Wärmeeinwirkung homogenisiert und durch Staudruck verdichtet und anschließend mit hohem Druck in eine gewünschte Form eingespritzt (Spritzguss), über Auslassdüsen geführt (Extrusion, Folienextrusion) oder als Kombination der beiden Verfahren in eine Form eingeblasen (Blasformen). Zudem können durch Rotationsformen auch Hohlkörper hergestellt werden.

### Bevorzugte Varianten des Granulats - nicht zur Erfindung gehörend

Das Granulat hat neben einer Restfeuchte von 15-22% folgende Zusammensetzung des Feststoffanteils:

| | |
|---|---|
| Stärke | 40-50% |
| Dickungs- und/oder Geliermittel | 40-50% |
| Optionale Zusätze | 0-20% |

Das Granulat hat neben einer Restfeuchte von 15-22% bevorzugt folgende Zusammensetzung des Feststoffanteils:

| | |
|---|---|
| Stärke | 45-50% |
| Dickungs- und/oder Geliermittel | 45-50% |
| Optionale Zusätze | 0-10% |

Das Granulat hat neben einer Restfeuchte von 15-22% besonders bevorzugt folgende Zusammensetzung des Feststoffanteils:
Variante A:

| | |
|---|---|
| Weizenstärke | 50% |
| Guarkernmehl | 45% |
| Xanthan Gum | 5% |

Variante B:

| | |
|---|---|
| Weizenstärke | 45% |
| Guarkernmehl | 40% |
| Xanthan Gum | 5% |
| Rapswachs | 5% |
| Naturkautschuk Pulver | 5% |

Variante C:

| | |
|---|---|
| Weizenstärke | 45% |
| Guarkernmehl | 40% |

| | |
|---|---|
| Xanthan Gum | 5% |
| Naturkautschuk Pulver | 10% |

Variante D:

| | |
|---|---|
| Weizenstärke | 45% |
| Guarkernmehl | 40% |
| Xanthan Gum | 5% |
| Zellstoff | 10% |

Variante E:

| | |
|---|---|
| Weizenstärke | 45% |
| Guarkernmehl | 40% |
| Xanthan Gum | 5% |
| Strohfasern | 10% |

Variante F:

| | |
|---|---|
| Weizenstärke | 40% |
| Guarkernmehl | 35% |
| Xanthan Gum | 5% |
| Strohfasern | 10% |
| Rapswachs | 5% |
| Naturkautschuk | 5% |

Variante G:

| | |
|---|---|
| Weizenstärke | 40% |
| Guarkernmehl | 55% |
| Xanthan Gum | 5% |

Variante H:

| | |
|---|---|
| Maisstärke | 20% |
| Agar Agar | 75% |
| Xanthan Gum | 5% |

Variante I:

| | |
|---|---|
| Maisstärke: | 45% |
| Guarkernmehl: | 40% |
| Xanthan Gum: | 5% |
| Holzstoff: | 9% |
| Magnesiumstearat: | 1% |

### Verfahren zur Herstellung des Granulats

Beschrieben werden hierin auch verschiedene Verfahren zur Herstellung verschiedener Granulate. Dabei weist ein beispielhaftes Verfahren die folgenden Schritte auf:
a) Herstellen einer Mischung aus festen und flüssigen Bestandteilen. Die festen Bestandteile umfassen

| | |
|---|---|
| Pflanzliche Stärke | 40-60% |
| Dickungs- oder Geliermittel | 40-60% |
| Optionale Zusätze | 0-20% |

Die optionalen Zusätze umfassen pflanzliche Fasern, Zellstoff, Holzstoff, Wachs und/oder Naturkautschuk sowie Aromen, Duftstoffe und sonstige hierin beschriebenen Zusätze, oder eine Mischung davon, Die flüssigen Bestandteile umfassen Wasser und werden in einer Menge von insgesamt 30-60% des Gesamtgewichts der festen Bestandteile dazugegeben.
b) Formen eines Granulatstrangs;
c) Aushärten und Entfeuchten des Granulatstrangs, wobei das Granulat eine Restfeuchte von 10-30%, bevorzugt von 15-22% zurück bleibt
d) Schneiden des in c) erzeugten Granulatstrangs zu Granulat; In manchen Ausführungsformen umfasst das Verfahren Schritt d), das Schneiden des Stranges zu Granulat vor Schritt c), das Aushärten und Entfeuchten.

Bevorzugt weist das beispielhafte Verfahren die folgenden Schritte auf:
a) Herstellen einer Mischung aus festen und flüssigen Bestandteilen. Die festen Bestandteile umfassen 40-60% pflanzliche Stärke und 40-60% pflanzliches Dickungs- und Gelierungsmittel bevorzugt im Verhältnis 1:1. Optional können ferner 0-20% Zusätze wie pflanzliche Fasern, Zellstoff, Holzstoff, Wachs und/oder Naturkautschuk sowie Aromen und dergleichen oder eine Mischung davon umfasst sein, wobei sich das Verhältnis der Stärke zu Dickungs- und/oder Geliermittel von 1:1 bevorzugt nicht verändert. Die flüssigen Bestandteile umfassen Wasser und werden in einer Menge von insgesamt 30-60% des Gewichts der Gesamtheit der festen Bestandteile dazugegeben.
b) Formen eines Granulatstrangs;
c) Aushärten und Entfeuchten des Granulatstrangs, wobei das Granulat eine Restfeuchte von 10-30%, bevorzugt von 15-22% zurück bleibt
d) Schneiden des in c) erzeugten Granulatstrangs zu Granulat;

### Schritt a

In Schritt a) werden pflanzliche Stärke und pflanzliches Dickungs- und Geliermittel mit Flüssigkeit umfassend Wasser zu einer pulverigen Mischung mit hoher Restfeuchte vermischt. Dies geschieht mit einem Mischer, der die Mischung zu einer homogenen Masse verrührt. Die Mischung kann optional auch Glycerin, Sorbit, pflanzliche Fasern, Zellstoff, Holzstoff, Konservierungsstoffe, Aromen, Wachs (bevorzugt Rapswachs, Carnaubawachs oder Sojawachs), Naturkautschuk (bevorzugt als Emulsion oder Pulver), Stearat (bevorzugt Magnesiumstearat), Öl (bevorzugt Nussöl), Essig und Lecithin und/oder sonstige hierin beschriebene Zusätze umfassen.

Hierbei sollten zunächst die festen/trockenen Bestandteile gemischt werden (Stärke, Dickungs- oder Geliermittel, Fasern etc.). Die flüssigen Bestandteile (Wasser, Glycerin, Öl, Lebensmittelfarbe, Aromen, etc.) werden dann bezogen auf das Gewicht der Mischung der festen/trockenen Bestandteile abgemessen und miteinander gemischt, bevor die Mischung der flüssigen Bestandteile zur Mischung der festen Bestandteile gegeben wird und die Mischungen dann vermischt werden. Dies vermeidet ein Verklumpen der Masse und verbessert die homogene Verteilung der einzelnen Bestandteile in der Masse die dann verdichtet und extrudiert wird.

Die Mengenanteile von Stärke zu Dickungs- und Geliermittel können im Bereich von 40-60% Stärke und 40-60% Dickungs- und/oder Geliermittel variieren, liegen jedoch bevorzugt in einem Verhältnis von 1:1 vor und bleiben bevorzugt 1:1, auch bei optionalem Zusatz weiterer Bestandteile wie pflanzliche Fasern, Wachs, Kautschuk, Zellstoff etc.

Bevorzugt wird daher eine Mischung umfassend Stärke und Dickungs- und Geliermittel im Verhältnis 1:1, und optional einen Zusatz von einem oder mehreren weiteren festen Bestandteilen wie pflanzliche Fasern, Wachs, Kautschuk, Zellstoff, Holzstoff oder eine Mischung davon. Ferner umfasst die Mischung bezogen auf das Gewicht der Trockenmasse der festen Bestandteile 30-60% flüssige Bestandteile umfassend Wasser.

In manchen Ausführungsformen umfasst das pflanzliche Dickungs- und/oder Gelierungsmittel in der Mischung aus Schritt a) Guarkernmehl, Xanthan Gum , Agar-Agar, Pektin, Carrageen, Alginat, Johannisbrotkernmehl, Sago, Gummi Arabicum, Reismehl, Hartweizenmehl oder Hartweizengrieß oder eine Mischung davon.

In bevorzugten Ausführungsformen ist das Dickungsmittel in der Mischung aus Schritt a) Guarkernmehl und Xanthan Gum, Teufelszunge, Agar Agar oder Pektin, am meisten bevorzugt ist eine Mischung aus Guarkernmehl und Xanthan Gum.

In einigen Ausführungsformen umfasst die pflanzliche Stärke in der Mischung aus Schritt a) unbehandelte Stärke umfassend Weizenstärke, Kartoffelstärke, Maisstärke, Reisstärke, Tapiokastärke oder Stärke aus Maniok, Knollenbohne, Batate, Yamswurzel, Knollen-Platterbse, Arakacha, Knolligem Sauerklee, Knolliger Kapuzinerkresse, Ulluco, Ostindischer Pfeilwurz, Pfeilwurz, Achira, Taro, Tannia, Weißer Seerose, Gelber Teichrose oder Chayote, bevorzugt Kartoffelstärke, Maisstärke, Tapiokastärke oder eine Mischung davon.

Die Mischung in a) kann zusätzlich eine oder mehrere der folgenden Zusätze umfassen.

Die Mischung in a) kann zusätzlich pflanzliches Glycerin und/oder Sorbit umfassen. Hierbei wird Glycerin bevorzugt als Lösung verwendet, kann aber auch in trockener Form dem Flüssigkeitsanteil beigemengt werden. Pflanzliches Glycerin weist wasserspeichernde Eigenschaften auf. Es wird als Feuchtigkeitsspender und Weichmacher verwendet. Durch die Zugabe von Glycerin kann die Flexibilität des Granulats und daraus hergestellter Produkte gesteigert werden. Alternativ zu Glycerin kann die Mischung Sorbit umfassen.

Die Mischung in a) kann zusätzlich Zellstoff und/oder Holzstoff umfassen. Bevorzugt ist der Zellstoff und/oder Holzstoff zumindest teilweise aus Baobab- oder Bambuspflanzenmaterial hergestellt. Dies erhöht die mechanische Stabilität und Bruchfestigkeit des Granulats und der daraus erzeugten Produkte und kann so das Abknicken, Splittern oder Zerreißen der Produkte verhindern. Das Granulat enthält bis zu 20% Zellstoff, Holzstoff oder pflanzliche Fasern. Ein höherer Gehalt würde die Weiterverarbeitung zu Produkten verkomplizieren, da die erzeugten Produkte zu spröde würden. Besonders gute mechanische Eigenschaften ergeben sich bei einem Gehalt von 4-10%. Im Vergleich zu Holzstoff hat Zellstoff den Vorteil, dass erzeugte Produkte eine höhere Transparenz aufweisen.

Die Mischung in a) kann zusätzlich pflanzliche Fasern, wie Strohfasern und/oder Grasfasern umfassen. Wie Zellstoff oder Holzstoff erhöht auch die Zugabe pflanzlicher Fasern die mechanische Stabilität der daraus hergestellten Produkte. Im Vergleich zu Zellstoff haben pflanzliche Fasern wie auch bei Holzstoff den Vorteil, dass erzeugte Produkte eine höhere Stabilität aufweisen und für deren Herstellung weniger Chemikalien zum Einsatz kamen. Die Mischung aus a) kann zu 20% pflanzliche Fasern enthalten. Bevorzugt jedoch 1-10%, am bevorzugtesten 10%. Dabei ist eine Faserlänge von 0,7-1,1mm optimal. Längere Fasern können den Quellprozess des Granulats sowie die Vernetzung der Rohstoffe im Granulat bei der weiteren Verarbeitung des Granulats also beim Herstellen eines gewünschten Produktes verzögern oder ganz verhindern. Kürzere Fasern haben keinen Effekt auf eine erhöhte Stabilität des Endprodukts.

Ferner kann die Mischung in a) zusätzlich Wachs, bevorzugt Rapswachs, Sojawachs oder Carnaubawachs, am bevorzugtesten Rapswachs als Feststoff umfassen. Die Anwesenheit von Wachs im Granulat führt dazu, dass daraus hergestellte Produkte eine höhere Resistenz gegen Flüssigkeiten wie Wasser, Öle und Fette aufweist. Der Zusatz von Wachs im Granulat kann die Stabilität des Produkts beim Kontakt mit einer Flüssigkeit um mindestens 10%, mindestens 20%, mindestens 25%. mindestens 30% oder sogar mehr als 30% steigern.

Zudem kann die Mischung in a) zusätzlich auch Biopolymere wie Naturkautschuk/Naturlatex/Naturlatexmilch umfassen. Naturkautschuk erhöht die Resistenz des Granulats und der daraus erzeugten Produkte gegenüber Wasser, Fett und Öl. Der Zusatz des höchst widerstandsfähigen Naturkautschuk im Granulat kann die Stabilität des Produkts beim Kontakt mit einer Flüssigkeit um mindestens 10%, mindestens 20%, mindestens 25%, mindestens 100% oder sogar mehr als 100% steigern. Naturkautschuk kann auch als Hauptbestandteil einer Beschichtung der aus Granulat hergestellten Produkte dienen. Besonders aus Granulat hergestellte Trinkhalme profitieren von einer Beschichtung mit Naturlatex in Hinblick auf Langlebigkeit in Flüssigkeit.

Die Mischung in a) kann zusätzlich ein weiteres, nicht chemisch verarbeitetes Biopolymer umfassen . Auch Biopolymere erhöhen die Resistenz der aus dem Granulat erzeugten Produkte gegenüber Wasser, Fett und Öl. Der Zusatz von höchst widerstandsfähigen Biopolymeren im Granulat kann die Stabilität des daraus hergestellten Produkts beim Kontakt mit einer Flüssigkeit um mindestens 10%, mindestens 20%, mindestens 25%, mindestens 100% oder sogar mehr als 100% steigern.

Die Mischung in a) kann zudem Öl, bevorzugt Nuss- oder Rapsöl umfassen. Öl verbessert die Fließeigenschaften der Rohmasse während der Herstellung zu Granulat als auch des Granulats während der Herstellung des Produkts.

Die Mischung in a) kann zudem ein oder mehrere Konservierungsstoffe enthalten. Durch Beimischen von Konservierungsstoffen zum Material des Granulats kann einem Schimmeln des erzeugten Granulats oder Produkts entgegengewirkt werden. Konservierungsstoffe umfassen E 220 Schwefeldioxid/schweflige Säure, E 221 Natriumsulfit, E 222 Natriumhydrogensulfit, E 223 Natriumdisulfit, E 224 Kaliumdisulfit, E 226 Calciumsulfit, E 227 Calciumhydrogensulfit, E 228 Kaliumhydrogensulfit oder eine Mischung davon. Diese Konservierungsstoffe sind als Lebensmittel Zusatzstoffe gelistet, die neben den klassischen Eigenschaften eines Konservierungsstoffs zudem auch dem Abbau von optional im Granulat vorhandenen Farbstoffen, Vitaminen, Duftstoffen und Aromen durch Sauerstoffeinfluss entgegenwirken. Somit bleibt die allgemeine Haltbarkeit des Granulats sowie des daraus hergestellten Produkts länger erhalten.

Ferner kann die Mischung in a) zusätzlich Essig und/oder Lecithin umfassen. Essig und Lecithin werden als Bindemittel der Inhaltsstoffe des Granulats verwendet. Die einzelnen Inhaltsstoffe des Granulats können also durch Zugabe von Essig und Lecithinen besser und homogener miteinander verbunden werden.

Die Mischung in a) kann zusätzlich ein pflanzliches Stearat wie Magnesiumstearat, Calciumstearat, Zinkstearat und/oder Aluminiumtristearat umfassen. Magnesiumstearat, Calciumstearat, Zinkstearat und Aluminiumtristearat werden als Gleit- oder Schmiermittel verwendet. Das Granulat bzw. Produkte aus diesem sind somit weniger adhärent und lassen sich leichter z.B. aus Gussformen lösen. In manchen Ausführungsformen umfasst die Mischung bevorzugt zwischen 0,25 und 5%, bevorzugt 1% Magnesiumstearat, 0,1-0,2% Calciumstearat, 0,1-0,4% Zinkstearat und/oder 1,6% Aluminiumtristearat.

Optional kann zur Mischung in a) Lebensmittelfarbe, herkömmlicher Aromen bevorzugt ätherischer Öle, Düfte, Geschmäcker und dergleichen zugegeben werden.

### Bevorzugte Varianten - nicht zur Erfindung gehörend

Die Zusammensetzung der Mischung zur Herstellung von Granulat umfasst

| | |
|---|---|
| Stärke | 40-60% |
| Dickungs- oder Geliermittel | 40-60% |
| Optionale Zusätze | 0-20% |

Bezogen auf das Gewicht der Masse zusätzlich:

| | |
|---|---|
| Flüssige Bestandteile umfassend Wasser | 30-60% |

Die Zusammensetzung der Mischung zur Herstellung von Granulat umfasst bevorzugter

| | |
|---|---|
| Stärke | 40-50% |
| Dickungs- oder Geliermittel | 40-50% |
| Optionale Zusätze | 0-20% |

Bezogen auf das Gewicht der Masse zusätzlich:

| | |
|---|---|
| Flüssige Bestandteile umfassend Wasser | 30-60% |

Eine noch bevorzugtere Zusammensetzung einer Mischung zur Herstellung von Granulat umfasst

| | |
|---|---|
| Stärke | 45-50% |
| Dickungs- oder Geliermittel | 45-50% |
| Optionale Zusätze | 0-10% |

Bezogen auf das Gewicht der Masse zusätzlich:

| | |
|---|---|
| Flüssige Bestandteile umfassend Wasser | 35-60% |

Besonders bevorzugte Zusammensetzungen der Mischung zur Herstellung von Granulat umfassen
Variante A:

| | |
|---|---|
| Weizenstärke | 50% |
| Guarkernmehl | 45% |
| Xanthan Gum | 5% |

Bezogen auf das Gewicht der Masse zusätzlich:

| | |
|---|---|
| Wasser | 40% |
| Pflanzliches Glycerin | 5% |
| Rapsöl | 4% |

Variante B:

| | |
|---|---|
| Weizenstärke | 45% |
| Guarkernmehl | 40% |
| Xanthan Gum | 5% |
| Rapswachs | 5% |
| Naturkautschuk Pulver | 5% |

Bezogen auf das Gewicht der Masse zusätzlich:

| | |
|---|---|
| Wasser | 30% |

| | |
|---|---|
| Pflanzliches Glycerin | 5% |
| Rapsöl | 4% |

Variante C:

| | |
|---|---|
| Weizenstärke | 45% |
| Guarkernmehl | 40% |
| Xanthan Gum | 5% |
| Naturkautschuk Pulver | 10% |

Bezogen auf das Gewicht der Masse zusätzlich:

| | |
|---|---|
| Wasser | 45% |
| Pflanzliches Glycerin | 5% |
| Rapsöl | 4% |

Variante D:

| | |
|---|---|
| Weizenstärke | 45% |
| Guarkernmehl | 40% |
| Xanthan Gum | 5% |
| Zellstoff | 10% |

Bezogen auf das Gewicht der Masse zusätzlich:

| | |
|---|---|
| Wasser | 40% |
| Pflanzliches Glycerin | 5% |
| Rapsöl | 4% |

Variante E:

| | |
|---|---|
| Weizenstärke | 45% |
| Guarkernmehl | 40% |
| Xanthan Gum | 5% |
| Strohfasern | 10% |

Bezogen auf das Gewicht der Masse zusätzlich:

| | |
|---|---|
| Wasser | 40% |
| Rapswachs | 5% |
| Naturkautschuk Pulver | 5% |
| Pflanzliches Glycerin | 5% |
| Rapsöl | 4% |
| E 221 Natriumsulfit | 1% |

Variante F

| | |
|---|---|
| Weizenstärke | 40% |
| Guarkernmehl | 35% |

| | |
|---|---|
| Xanthan Gum | 5% |
| Strohfasern | 10% |
| Rapswachs | 5% |
| Naturkautschuk Pulver | 5% |

Bezogen auf das Gewicht dieser Masse Zugabe von

| | |
|---|---|
| Wasser | 40% |
| Pflanzliches Glycerin | 5% |
| Rapsöl | 4% |

Variante G:

| | |
|---|---|
| Weizenstärke | 40% |
| Guarkernmehl | 55% |
| Xanthan Gum | 5% |

Bezogen auf das Gewicht dieser Masse Zugabe von

| | |
|---|---|
| Wasser | 40% |
| Pflanzliches Glycerin | 5% |
| Rapsöl | 4% |

Variante H:

| | |
|---|---|
| Maisstärke | 20% |
| Agar-Agar | 75% |
| Xanthan Gum | 5% |

Bezogen auf das Gewicht dieser Masse Zugabe von

| | |
|---|---|
| Wasser | 40% |
| Pflanzliches Glycerin | 5% |
| Rapsöl | 4% |

Variante I:

| | |
|---|---|
| Maisstärke: | 45% |
| Guarkernmehl: | 40% |
| Xanthan Gum: | 5% |
| Holzstoff: | 9% |
| Magnesiumstearat: | 1% |

Bezogen auf die Trockenmasse:

| | |
|---|---|
| Wasser: | 60% |

### Schritt b

In Schritt b) wird die Mischung aus Schritt a) durch Extrusion zu einem oder mehreren Granulat-Strängen geformt. Es kann ein "Single-" oder "Twin-Extruder" verwendet werden. Die pulverige bis zähflüssige Masse aus a) wird dabei direkt in einen Einfülltrichter eines Extruders gegeben über welchen die Masse über einen Einzug in den Zylinder des Extruders überführt wird. Der Einzug sollte eine Temperatur von 45°C aufweisen. Eine Verarbeitung des Materials kann im Zylinder bei einer Temperatur zwischen 50°C und 110°C erfolgen. Die Temperatur des Zylinders sollte bevorzugt durchschnittlich 70°C aufweisen. Unterschiedliche Temperaturbereiche können mit Hilfe von Heizbändern, die um den Zylinder herum angebracht sind, eingestellt werden, wobei sich die Temperaturgrenzen im Zylinder überlappen. Bevorzugt sind um den Zylinder bei der Extrusion fünf Heizbänder angebracht, welche optimal von Richtung Einzug zum Auslass aufeinanderfolgend auf 80°C, 105°C, 100°C, 50°C eingestellt sind. Die Masse wird bevorzugt mit einer im Zylinder befindlichen Schnecke verdichtet (Schneckenextruder). Jegliche Art von Schnecke (Single-, Double-, Spezial-Extruder oder Kokneter) können eingesetzt werden. Die Temperatur im Schneckenkanal hängt auch von der Schneckengeometrie ab. Unter Energiezufuhr wird die Masse plastifiziert. Es entsteht eine homogene in sich vernetzte und verdichtete Masse. Die verdichtete Masse wird durch das Rotieren der Schnecke zu einem oder bevorzugt mehreren Auslässen geführt und durch diesen/diese hindurchgepresst/extrudiert. Optional kann in einer Dekompressionszone vor dem einen oder den mehreren Auslässen über einen Entgasungs-Dom der verdichteten Masse das Wasser entzogen werden. Auf diese Weise wird die verdichtete Masse zu einem oder mehreren Granulat-Strängen geformt.

### Schritt c

In Schritt c) werden die Granulatstränge getrocknet und ausgehärtet. Dies kann zum Beispiel durch Trocknung mittels Belüftung/Ventilation oder Luftentfeuchter geschehen. In manchen Ausführungsformen wird das Produkt in eine "Cooling und Cutter"-Maschine eingeführt, wo es durch Ventilatoren getrocknet und dadurch gehärtet wird. Die Härtung kann aber auch mittels Wärme stattfinden. Dies kann alternativ oder zusätzlich zur Härtung mittels Belüftung/Ventilation geschehen. In manchen Ausführungsformen wird die Härtung mittels Wärme in einem Heiztunnel durchgeführt. Der Temperaturbereich liegt hierbei zwischen 25 °C und 100 °C, bevorzugt zwischen 45 °C und 90 °C, noch bevorzugter bei 85 °C. In manchen Ausführungsformen wird die Härtung mittels Luftentfeuchter gehärtet. Es ist jedoch stets darauf zu achten, dass das Granulat eine Restfeuchte von 10-30%, bevorzugt 15-22% behält.

### Schritt d

In Schritt d) werden die Granulatstränge aus Schritt c) mit Hilfe rotierender Klingen zu Granulat geschnitten. Optional werden die dazu verwendeten Klingen mit Wasser gekühlt. Das Granulat ist würfel-, oder zylinderförmig oder kann zu Plättchen oder Flakes geschnitten werden.

### Optional Schritt d) vor Schritt c)

In einer alternativen Ausführungsform wird der Granulatstrang nach Schritt b) zunächst in die gewünschte Länge zu Granulat geschnitten und dann erst getrocknet Die Verfestigung kann beispielsweise in einem Trocknungstunnel oder durch Ventilatoren erfolgen. Das Ergebnis ist ein Granulat in Zylinder-, Perlen- oder Linsenform. Auch hier ist auf eine Restfeuchte von 10-30%, bevorzugt 15-22% des Granulats zu achten.

### Weitere optionale Schritte

Das Verfahren kann zudem die Bestrahlung des Granulats oder Produktes zur Sterilisation mit UV-Licht umfassen.

Das fertige Granulat kann anschließend in Säcke, Boxen oder andere Gebinde verpackt und transportiert werden.

### Verfahren zur Weiterverarbeitung des Granulats

Das Granulat kann ohne weitere Vorbehandlung oder Zugabe weiterer Rohstoffe sofort zu einem Endprodukt verarbeitet werden. Das bereitgestellte Granulat ist somit ein "ready-to-use" Produkt.

Einem hierin beschriebenen Granulat das noch keine Zusätze wie Farbstoffe, Aromen, Düfte oder Stearate, enthält, können diese Zusätze dem Granulat auch bei der Weiterverarbeitung hinzugefügt werden. Somit können aus einem "Standard-Granulat" Produkte mit unterschiedlichen Farben oder, Gerüchen hergestellt werden. Die Zusätze werden zusammen mit dem Granulat in den Einfülltrichter der Spritzgießmaschine oder des Extruders gegeben.

Je nach gewünschtem Produkt wird eine Verarbeitung des Granulats mittels Spritzgießtechnik unter Verwendung von herkömmlichen Spritzgießmaschinen oder mittels Extrusionstechnik unter Verwendung von herkömmlichen Extrudern gewählt. Bekannte Spritzgießmaschinenhersteller sind beispielsweise KraussMaffei, Arburg, Engel und Wittmann Battenfeld.

Entscheidend für die problemlose Weiterverarbeitung ohne Beimischung zusätzlicher Bestandteile wie Wasser oder sonstige Lösungsmittel ist die Restfeuchte des Granulats. Das Granulat muss dabei eine Restfeuchte von 10-40%, bevorzugt 18-22%, am bevorzugtesten 20% aufweisen. Eine Restfeuchte des Granulats in diesem Bereich resultiert in einer optimalen Verdichtung und Homogenisierung des Granulats im weiteren Herstellungsprozess zu den gewünschten Produkten. Eine höhere Restfeuchte im Granulat führt zu einer schmierigen Masse im weiteren Herstellungsprozess von aus dem Granulat hergestellten Produkten welche den Schneckenkanal in der Spritzgießmaschine verstopfen. Dies führt zu Rückstau und Produktionsstopp. Eine zu geringe Restfeuchte bewirkt, dass sich das Granulat-Material in der Spritzgießmaschine nicht vernetzt. Daraus resultiert, dass sich das Material verzieht, sich nicht verdichtet und somit kein stabiles Produkt entsteht. Zudem wird keine glatte Oberfläche erzeugt. Es ist darauf hinzuweisen, dass anders wie bei Kunststoffgranulat, das Granulat nicht schmilzt sondern durch hohen Druck in der Spritzgießmaschine oder dem Extruder im Schneckenkanal formverändert und vernetzt wird. Die Restfeuchte im Granulat kann dementsprechend Unterschiede im erzeugten Produkt hervorrufen. Ein Einziehen von Granulat in die Schnecke gestaltet sich bei Granulat mit einer Restfeuchte von 10-30%, bevorzugt 15-22% als problemlos. Auch die Zykluszeiten im Formungsprozess werden durch eine Restfeuchte von 15-22% optimal verkürzt, wodurch erhebliche Zeitersparnis im Formungsprozess erzielt werden kann.

### Spritzgießen

Nahezu jegliche Form und Größe des Produktes kann durch Spritzgießen erreicht werden. Eine herkömmliche Spritzgießmaschine (Schneckenkolbenspritzgießmaschine) besteht aus zwei Einheiten, der Spritzeinheit bzw. Plastifiziereinheit, welche das Granulat plastifiziert, aufbereitet und dosiert, und der Schließeinheit, die das Formwerkzeug schließt, zuhält und wieder öffnet. Die Spritzeinheit setzt sich im Wesentlichen aus einem waagerechten Plastifizierzylinder und einer darin befindlichen Schnecke zusammen. Die Schnecke rotiert und ist auch axial im Zylinder beweglich. Am vorderen Ende des Plastifizierzylinders befindet sich ein Einfülltrichter zum Einfüllen des Rohmaterials, im vorliegenden Fall des Granulats, am anderen Ende befindet sich die Düse, welche den Übergang zum Formwerkzeug bzw. der Schließeinheit darstellt.

Das Granulat wird zunächst in den Einfülltrichter und anschließend über den Einzug in die Gänge der Spritzgießmaschine gerieselt. Der Einfülltrichter kann ein normaler Trichter aber auch ein Rührtrichter oder ein unter Vibration gesetzter Trichter sein. Das Granulat wird durch eine sich drehende Schnecke in Richtung Schneckenspitze gefördert und durch die Wärme des Zylinders und die Friktionswärme, die beim Zerteilen und Scheren des Materials entsteht erwärmt. Wie unten genauer erläutert wird das Material hierbei nicht aufgeschmolzen, wie es etwa bei Kunststoffgranulat passieren würde. Das vorliegende Material wird in sich vernetzt und verdichtet und sammelt sich vor der Schneckenspitze, wenn die Düse geschlossen ist. Da die Schnecke axial beweglich ist, weicht sie durch den Druck der sich an der Spitze sammelnden Masse zurück. Die Rückwärtsbewegung wird mechanisch oder elektrisch gebremst, sodass sich im Material ein Staudruck aufbaut. Dieser Staudruck in Verbindung mit der Schneckenrotation verdichtet und homogenisiert das Material um ein weiteres. Sobald sich für das Werkstückvolumen ausreichende Masse angesammelt hat, ist der Dosiervorgang beendet und das verdichtete Material wird unter hohem Druck durch die Düse und den Anguss bzw. das Angusssystem des Spritzgießwerkzeugs in den formgebenden Hohlraum gedrückt. Eine direkte Einspritzung ohne Anguss ist auch verwirklichbar.

Wichtig bei der Durchführung des Verfahrens zur Verarbeitung des vorliegenden Granulates ist die Temperatur der Plastifizierschnecke und den anderen Bauteilen der Spritzgießmaschine. Der Einfülltrichter ist nicht temperiert. Der Einzug sollte auf 45°C vorgewärmt sein. Bei einer Temperatur von 50°C und 100°C erweicht das Granulat und ist bearbeitbar. Die bevorzugte Durchschnittstemperatur bei der Weiterverarbeitung von hierin beschriebenem Granulat liegt bei 75°C. Der Zylinder in dem sich der Schneckenkanal befindet, wird von mehreren aufeinanderfolgenden optional unterschiedlich temperierten Heizbändern umschlossen. Zwischen 50°C und 100°C ist eine Vernetzung und Verdichtung des Materials gegeben. Daher wird der Schneckenkanal bevorzugt von vier Heizbändern umschlossen, welche von Richtung Einfülltrichter bis Schneckenspitze bevorzugt aufeinanderfolgende Temperaturen von 45°C, 70°C, 80°C, 90°C aufweisen. Eine Abweichung von jeweils mehr als +/- 15% ist nicht vorteilhaft und sollte vermieden werden. Je nach Zusammensetzung des Granulats hat aber eine Temperaturabweichung im Rahmen der +/-15% keine negativen Auswirkung auf die Materialeigenschaften des entstehenden Produktes. Bei manchen Ausführungsformen haben die drei Heizbänder von Richtung Einfülltrichter bis Schneckenspitze aufeinanderfolgende Temperaturen von 90°C, 80°C, 70°C.

Bei der Verarbeitung des Granulats in einem Temperaturbereich zwischen 50°C und 100°C entsteht ein "Glas-Übergang" wobei ein Übergang von einem zähflüssigen und gummielastischen Material in flexiblem Zustand zu einem glasigen und harten Zustand erfolgt. Dieser Übergang wird durch Temperatur aber auch durch Friktion und Scherung der Schnecke hervorgerufen. Die Restfeuchte im Granulat hat Auswirkungen auf diesen Glas-Übergang. Erhöhte Restfeuchte im Material verzögert den Übergang und verlängert somit den Herstellungsprozess. Eine Temperatur von über 90°C sollte vermieden werden. Bei einer Temperatur über 90°C kann es zu einem "Verziehen" der Oberfläche des Produkts, sowie auch dem ganzen Produkt kommen. Bei Temperaturen zwischen 100°C und 130°C war ein Verzug im Produkt deutlich sichtbar. Ab einer Temperatur von etwa 100°C entstehen im erweichten und sich vernetzenden Material Wasserdampf und Gase, wodurch sich das Material nicht optimal verarbeiten lässt. Es entstehen Risse im Produkt. Ab etwa 130°C ist ein stark verbrannter Geruch bei der Verarbeitung und eine bräunliche Verfärbung des Endprodukts festzustellen. Eine thermische Zersetzung beginnt bei ca. 275°C. Die optimale Verarbeitungstemperatur des vorliegenden Granulats liegt bei 80°C bis 90°C.

Die Schneckengeometrie hat Einfluss auf die Dichte des Materials und kann daher eine entscheidende Rolle für die Stabilität und Struktur des aus dem Granulat erzeugten Produkts spielen. Die Schnecke ist bevorzugt im Einfüllbereich dünner und wird zur Düse hin dicker. Somit verdichtet sich das Material zusätzlich.

Das verdichtete Material wird anschließend durch die Düse über den Anguss in ein Formwerkzeug gepresst. Die Düse sollte bevorzugt eine Temperatur von 80°C-180°C aufweisen. Da das verdichtete Material verhältnismäßig kurz in Kontakt mit der Düse und der dadurch zugeführten Hitze kommt, hat diese keine negative Auswirkung auf das Material. Optimal ist aber eine Düsen-Temperatur von 85-95°C. Die Düsentemperatur kann für dickwandige Produkte (>10mm) auch höher liegen, etwa bei 165°C.

Während der "Einspritzung" des verdichteten Materials in die Form bzw. das Werkzeug wird die Masse unter hohem Druck durch die geöffnete Düse und einen Anguss oder ein Angusssystem in den formgebenden Hohlraum gepresst. Der Anguss ist der Teil des Werkzeugs, welcher nicht zur letztendlichen Form gehört und dient als Zuführungskanal zum formgebenden Hohlraum. Ein Erhitzen des formgebenden Werkzeugs ist vorteilhaft für die Qualität des entstehenden Produktes. Ein Erhitzen der Form/des Werkzeugs auf zwischen 60 und 85°C, bevorzugt 65°C, führt zu einer optimalen Oberflächenstruktur des erzeugten Produkts. Unter Verwendung einer nicht aufgewärmten Form können sich Flecken auf der Oberfläche des Produkts bilden. Zudem ist bei Verwendung von kalten Formen die Oberflächenstruktur des erzeugten Produkts etwas rauer als bei der Verwendung von vorgewärmten Formen. Der Anguss lässt sich aufgrund der Eigenschaften des vernetzten Materials, vor allem aufgrund einer Restfeuchte von 10-13% nur schwer lösen. Daher sollte die Angusspartie nicht zu eng sein und eventuell speziell beschichtet sein. Eine Angusspartie aus Edelstahl ergab sich hier als bevorzugt, wohingegen eine Angusspartie aus Aluminium nicht optimal war. Auch eine Nanobeschichtung der Edelstahl-Angusspartie war vorteilhaft. Für kleinere Formteile hat sich eine direkte Einspritzung ohne Anguss als vorteilhaft erwiesen. Ferner konnten beobachtet werden, dass sich die Produkte besonders leicht aus Werkzeugen/Formen lösen, die eine Oberflächenbeschichtung aus Teflon, Keramik oder nanotechnologischen Lösungen aufweisen.

Zum Vergleich, in der Kunststoff-verarbeitenden Industrie wird das Kunststoffgranulat typischerweise bei zwischen 200°C und 300°C zum Schmelzen gebracht und in ein 20°C bis 120°C warmes Werkzeug gepresst. Das Temperaturgefälle ist hier also deutlich größer.

Nach dem die Einspritzung und Ausfüllung der Form mit dem verdichteten Material vollendet ist, hat auch der Zeitraum, über welchen sich das Produkt in der Form befindet Auswirkung auf das Produkt. Bei niedrigen Temperaturen in der Form sind auch bei längeren Zykluszeiten ab etwa 20 Sekunden negative optische und funktionale Merkmale im Produkt zu erkennen. Bei vorgewärmten Formen ist eine Zykluszeit von 4-16 Sekunden optimal. Die kurze Zykluszeit von 4-16 Sekunden ist demnach vorteilhaft für die Gesamtdauer des Herstellungsverfahrens sowie für die optischen und funktionalen Eigenschaften des Produkts. Allerdings ist darauf hinzuweisen, dass sich dieses Zeitfenster aufgrund der Eigenschaften der Form, wie etwa das Volumen der Form, verändern kann.

Aufgrund einer Restfeuchte von meist 5-15%, bevorzugt 5-10% im gespritzten Produkt (vor Trocknung) ist, wie beim Abkühlen eines Thermoplasten auch, eine Volumenschwindung zu beobachten. Ein "Nachdrücken" wie bei der Kunststoffverarbeitung, d.h. ein Nachfüllen des Materials unter Druck bis der Siegelpunkt erreicht ist, d.h. bis der Anguss erstarrt ist, ist nicht unbedingt notwendig. Kann jedoch bei speziellen Formteilen angewendet werden. Stattdessen sollte beim Erstellen einer Gussform ein höheres Volumen einkalkuliert werden, sodass das endgültig ausgetrocknete Produkt auch die gewünschten Maße annimmt.

Beim Abkühlen bzw. Trocknen des aus Granulat hergestellten Produktes erfolgt eine Kristallisation. Im Gegensatz zum Kunststoff-enthaltenden Thermoplasten gibt es keinen "Peak", da es kein klassisches Schmelzen des Materials gibt.

### Extrudieren

Das Granulat kann auch im Extrusionsverfahren verarbeitet werden. Das Verfahren ist ähnlich zum Spritzgussverfahren in Bezug auf Temperaturen und Aufbau des Schneckenzylinders. Beim Extrusionsverfahren wird die verdichtete Masse allerdings nicht in eine Form/Werkzeug gespritzt, sondern direkt und kontinuierlich aus einem formgebenden Auslass herausgepresst und entlassen. Dabei entsteht ein Körper mit dem Querschnitt der Öffnung (das Extrudat) in theoretisch beliebiger Länge. Das Extrusionsverfahren wird vorliegend angewendet, wenn rohrförmige Produkte wie etwa Trinkhalme, Lollysicks, Halter für Luftballone, Stränge zum Formen von Kleiderbügeln, aber auch Produkte wie Folien erhalten werden sollen.

Es kann ein "Single-" oder "Twin-Extruder" verwendet werden. Das Granulat wird dabei direkt in einen Einfülltrichter eines Extruders gegeben über welchen die Masse über einen Einzug in den Zylinder des Extruders überführt wird. Der Einzug sollte eine Temperatur von 45°C aufweisen. Eine Verarbeitung des Granulats kann im Zylinder bei einer Temperatur zwischen 50°C und 110°C erfolgen. Die Temperatur des Zylinders sollte bevorzugt durchschnittlich 70°C aufweisen. Unterschiedliche Temperaturbereiche können mit Hilfe von Heizbändern, die um den Zylinder herum angebracht sind, eingestellt werden, wobei sich die Temperaturgrenzen im Zylinder überlappen. Bevorzugt sind um den Zylinder bei der Extrusion fünf Heizbänder angebracht, welche optimal von Richtung Einzug zum Auslass aufeinanderfolgend auf 80°C, 105°C, 100°C, 50°C eingestellt sind. Die Masse wird bevorzugt mit einer im Zylinder befindlichen Schnecke verdichtet (Schneckenextruder). Jegliche Art von Schnecke (Single-, Double-, Spezial-Extruder oder Kokneter) können eingesetzt werden. Die Temperatur im Schneckenkanal hängt auch von der Schneckengeometrie ab. Unter Energiezufuhr wird die Masse plastifiziert. Es entsteht eine homogene in sich vernetzte und verdichtete Masse. Die verdichtete Masse wird durch das Rotieren der Schnecke zu einem oder bevorzugt mehreren Auslässen geführt und durch diesen/diese hindurchgepresst/extrudiert. Optional kann in einer Dekompressionszone vor dem einen oder den mehreren Auslässen über einen Entgasungs-Dom der verdichteten Masse das Wasser entzogen werden. Auf diese Weise wird die verdichtete Masse zu einem oder mehreren Produkt-Strängen, zum Beispiel zu Trinkhalmen geformt.

### Aus Granulat hergestellte Produkte und deren Eigenschaften

Hierin beschrieben wird auch ein biologisch abbaubares und kompostierbares Produkt, eine Gebrauchsgegenstand, hergestellt aus dem beschriebenen biologisch abbaubaren und kompostierbaren Granulat, wobei das Produkt ein Einwegprodukt, eine Folie, Verpackungsmaterial, ein medizinischer Bedarfsartikel oder ein Gebrauchsgegenstand ist, zum Beispiel: Hilfsmittel zum Essen oder Trinken, wie Trinkhalme, Trinkbecher, Eisbecher, Schnapsgläser/Shotgläser, Pommesgabeln, Einwegbesteck im Allgemeinen, Eislöffel, Kaffee-Umrührer, medizinische Bedarfsartikel wie Wattestäbchen, Zahnbürsten und Mundspatel, aber auch Gebrauchsgegenstände des täglichen Lebens wie Einwegkleiderbügel, Kämme, Luftballonhalter, Dosierungslöffel z.B. für Waschpulver oder Kaffee, Heftklammern, und auch Verpackungsmaterial wie Gemüse-/Obsttransportschalen, Einwegtüten, Folien, Schalen und dergleichen. Die aus Granulat hergestellten Produkte enthalten dieselbe Feststoffzusammensetzung wie das Granulat selbst.

Das Produkt kann gefärbt sein oder ungefärbt.

Das Produkt kann geruchlos sein oder einen gewünschten Geruch aufweisen.

Das Produkt ist formstabil, kann aber je nach Granulat und Zusatz härter oder weicher sein.

### Beschichtung

Das entstandene Produkt kann mit einer Beschichtung umfassend Naturkautschuk/Naturlatex und/oder Wachs, bevorzugt Rapswachs oder Carnaubawachs beschichtet werden. Vor allem bei Produkten die in direktem Kontakt mit Flüssigkeiten stehen, wie etwa Trinkhalme, ist eine Beschichtung vorteilhaft.

Eine Wachs-basierte Beschichtung, welche Wachs als Hauptbestandteil enthält (Wachschicht) umfasst 30-50% Wachs, bevorzugt Carnaubawachs oder Rapswachs, 50-70% Wasser und optional Hilfsstoffe und/oder ein oder mehrere anti-stick Zusätze. Bevorzugt enthält die Wachs-basierte Emulsion 32,5% Carnaubawachs, 17,5% Paraffin und 50% Wasser oder 32,5% Carnaubawachs, 17,5% Naturlatex und 50% Wasser. Eine weitere bevorzugte Wachsemulsion besteht aus 50% Carnaubawachs und 50% Wasser.

Besonders bevorzugt ist eine Naturlatex-basierte Beschichtung, welche Naturlatex als Hauptbestandteil enthält und ferner Füllstoffe umfasst. Eine Naturlatex-basierte Emulsion besteht aus 50-95% Naturlatex 5-10% Wachs, bevorzugt Carnaubawachs oder Rapswachs, und optional Hilfsstoffe und/oder ein oder mehrere anti-stick Zusätze. Weitere Naturlatex-basierte Emulsionen enthalten 10% Carnaubawachs und 90% Kautschukemulsion, bestehend aus 60% Feststoff-Kautschuk und 40% Wasser oder Naturlatexmilch; 5% Carnaubawachs, 45% Kautschuk und 50% Wasser; 5% Rapswachs, 45% Kautschuk und 50% Wasser; 5% Carnaubawachs und 95% Naturlatex; oder 5% Carnaubawachs, 2% Glycerin, 93% Naturlatex.

Zudem kann die äußere Beschichtung ein oder mehrere anti-stick Zusätze umfassen. Die Anwesenheit solcher Zusätze verhindert ein späteres Aneinanderkleben der einzelnen Produkte aneinander, wenn diese gestapelt oder aneinandergereiht oder nebeneinander gelagert und aufbewahrt werden. Anti-stick Zusätze sind Öle umfassend Rapsöl, Kokosöl und Sonnenblumenöl, bevorzugt Rapsöle. Das Öl wird zu 0-5%, bevorzugt zu 0,5-1%, am meisten bevorzugt zu 0,5% der Menge der Beschichtungsemulsion hinzugegeben. Ein weiterer anti-stick Zusatz ist Sonnenblumenlecithin oder Sojalecithin. Dies kann zusätzlich zu einem Öl hinzugegeben werden, damit sich das Öl mit der Wachsemulsion vermengt. Ein zusätzlicher anti-stick Zusatz ist ein Stearat, wie z.B. Magnesiumstearat pflanzlichen Ursprungs. Dieses kann in einer Menge von 0,25%-0,75%, bevorzugt von 0,3% zur Wachsemulsion dazu gegeben werden. Der optionale anti-stick Zusatz Glycerin kann entweder der Beschichtungsemulsion zugesetzt werden oder als eine Art zweite Beschichtung auf die ausgehärtete erste Beschichtung mittels Düsen aufgesprüht oder durch ein Eintauchen in Glycerin Lösung aufgebracht werden.

### VII. Beispiele - nicht zur Erfindung gehörend

### Beispiel 1: Herstellung von Granulat, Variante A

Das Ausgangsmaterial zur Herstellung des Granulats bestand aus:

| | |
|---|---|
| Weizenstärke | 50% |
| Guarkernmehl | 45% |
| Xanthan Gum | 5% |

Bezogen auf das Gewicht dieser Masse Zugabe von

| | |
|---|---|
| Wasser | 40% |
| Pflanzliches Glycerin | 5% |
| Rapsöl | 4% |

Zunächst wurden feste Bestandteile und flüssige Bestandteile getrennt voneinander gemischt. Dann erfolgte das Mischen der festen und flüssigen Bestandteile zu einer pulverigen Mischung (ca. 10 - 15 min).

Anschließend wurde die noch pulverige Masse über einen Trichter und Einzug (45°C) in einen Extruder gegeben. Diese Schnecke im Extruder zog die erzeugte Mischung ein, verdichtete und "plastifizierte" sie unter Energiezufuhr und sorgte gleichzeitig für eine homogene Masse. Der beheizte Kanal der Förderschnecke wurde mit fünf Heizelementen (in der Reihenfolge: 80C°, 105C°, 100C°, 95°C, 90C°) erhitzt. Die Förderschnecke transportierte die Masse zu den Auslässen wo die Masse herausgepresst wurde. Auf diese Weise wurde die Masse zu Strängen geformt und auf einem Förderband durch Ventilatoren abgekühlt. Die erzeugten Stränge wurden nun mit einer rotierenden Klinge zu Granulat geschnitten. Hierbei durchlief die Klinge Bürsten, die Sie vor dem Schnitt reinigten. So wurde ein linsenförmiges Granulat erzeugt. Im Anschluss härtete das Granulat für 2 Tage aus und wurde schließlich endgültig verpackt.

Das fertige Granulat hat eine Restfeuchte von 19-20% und eine Feststoffzusammensetzung aus

| | |
|---|---|
| Weizenstärke | 50% |
| Guarkernmehl | 45% |
| Xanthan Gum | 5% |

### Beispiel 2: Herstellung von Granulat, Variante B

Das Ausgangsmaterial für das Granulat bestand aus:

| | |
|---|---|
| Weizenstärke | 45% |
| Guarkernmehl | 40% |
| Xanthan Gum | 5% |
| Rapswachs | 5% |
| Naturkautschuk Pulver | 5% |

Bezogen auf das Gewicht dieser Masse Zugabe von

| | |
|---|---|
| Wasser | 30% |
| Pflanzliches Glycerin | 5% |
| Rapsöl | 4% |

Zunächst wurden feste Bestandteile und flüssige Bestandteile getrennt voneinander gemischt. Dann erfolgte das Mischen der festen und flüssigen Bestandteile zu einer pulverigen Masse (ca. 10 - 15 min).

Anschließend wurde die noch pulverige Masse über einen Trichter und Einzug (45°C) in einen Extruder gegeben. Diese Schnecke im Extruder zog die erzeugte Mischung ein, verdichtete und "plastifizierte" sie unter Energiezufuhr und sorgte gleichzeitig für eine homogene Mischung. Der beheizte Kanal der Förderschnecke wurde mit fünf Heizelementen (in der Reihenfolge: 45C°, 75C°,100C°, 60C°, 20C°) erhitzt. Die Schnecke befördert die verdichtete Masse zu den Auslässen und presste sie heraus. Auf diese Weise wurde die Masse zu Strängen geformt und von einer rotierenden Klinge direkt am Ausstoß zu Granulat geschnitten. Hierbei durchlief die Klinge Bürsten, die Sie vor dem Schnitt reinigten. So wurde ein perlenförmiges Granulat erzeugt. Im Anschluss härtete das Granulat mittels Luftentfeuchter für 1 Tag aus und wurde schließlich endgültig verpackt.

Das fertige Granulat hat eine Restfeuchte von 19-20% und eine Feststoffzusammensetzung aus

| | |
|---|---|
| Weizenstärke | 45% |
| Guarkernmehl | 40% |
| Xanthan Gum | 5% |
| Rapswachs | 5% |
| Naturkautschuk | 5% |

### Beispiel 3: Herstellung von Granulat, Variante F, und eines daraus hergestellten Gebrauchsgegenstand

Das Ausgangsmaterial für das Granulat bestand aus:

| | |
|---|---|
| Weizenstärke | 40% |
| Guarkernmehl | 35% |
| Xanthan Gum | 5% |
| Strohfasern | 10% |
| Rapswachs | 5% |
| Naturkautschuk Pulver | 5% |

Bezogen auf das Gewicht dieser Masse Zugabe von

| | |
|---|---|
| Wasser | 40% |
| Pflanzliches Glycerin | 5% |
| Rapsöl | 4% |

Zunächst wurden feste Bestandteile und flüssige Bestandteile getrennt voneinander gemischt. Dann erfolgte das Mischen der festen und flüssigen Bestandteile zu einer pulverigen Masse (ca. 10 - 15 min).

Anschließend wurde die noch pulverige Masse direkt in einen Extruder gegeben. Dieser zog die erzeugte Masse ein, verdichtete und "plastifizierte" sie unter Energiezufuhr und sorgte gleichzeitig für eine homogene Mischung. Der beheizte Kanal der Förderschnecke wurde mit fünf Heizelementen (in der Reihenfolge: 40C°, 80C°, 100C°, 60C°, 21C°) erhitzt, führte die Masse zu den Auslässen und presste die Masse heraus. Auf diese Weise wurde die Masse zu Strängen geformt und auf einem Förderband durch Ventilatoren abgekühlt. Die erzeugten Stränge wurden nun mit einer rotierenden Klinge zu Granulat geschnitten. Hierbei durchlief die Klinge Bürsten, die Sie vor den Schnitt reinigten. So wurde ein linsenförmiges Granulat erzeugt. Im Anschluss härtete das Granulat für 2 Tage aus und wurde schließlich endgültig verpackt.

Das fertige Granulat hat eine Restfeuchte von 19-20% und eine Feststoffzusammensetzung aus

| | |
|---|---|
| Weizenstärke | 40% |
| Guarkernmehl | 35% |
| Xanthan Gum | 5% |
| Strohfasern | 10% |
| Rapswachs | 5% |
| Naturkautschuk | 5% |

Im Folgenden wurde das erzeugte Granulat über einen Einfülltrichter über den Einzug in die rotierende Schnecke eingefüllt. Darin wurde das Granulat durch die Rotation der sich im Zylinder befindlichen Schnecke in Richtung Schneckenspitze befördert. Hierbei entstand durch Zerteilen und Scheren des Granulats eine Friktionswärme, die zusammen mit der Beheizung des Zylinders durch Heizbänder für die Deformierung des Granulats und ein Homogenisieren der Masse sorgte. Zur Verfügung stand uns ein 2-fach Werkzeug mit einem Unterfluranguss. Das Werkzeug wurde auf 85°C temperiert, die Düse auf 90°C, der Zylinder bereichsweise auf 90°C, 80°C und 70°C der Einzug auf 45°C.

Im weiteren Prozess-Verlauf staute sich die homogenisierte Masse an der Schneckenspitze, wo sich die Auslassdüse befindet, die zu diesem Zeitpunkt geschlossen war. Dadurch entstand Druck auf die Schnecke. Da diese axial beweglich ist, schraubte sie sich unter diesem Druck rückwärts aus der homogenisierten Masse heraus. Durch einen Hydraulikzylinder oder mittels elektrischer Steuerung wurde die Rückwärtsbewegung der Schnecke gebremst. Dadurch entstand in der homogenisierten Masse Staudruck. Durch diesen Staudruck in Verbindung mit der Rotation der Schnecke wurde die homogenisierte Masse stark verdichtet und weiter homogenisiert.

Sobald sich eine für das Volumen des zu fertigenden Werkstücks ausreichende Menge an verdichteter Masse in der Schneckenspitze vor der Auslassdüse angesammelt hat, wurde die Rotation der Schnecke eingestellt und der Dosiervorgang beendet.

Daraufhin erfolgte das Anfahren der Spritzeinheit enthaltend das Werkzeug an die Schließeinheit. Sie wurde an die Auslassdüse angedrückt und die Schnecke wurde zeitgleich rückseitig unter Druck gesetzt. Hierbei entstand ein Druck von um die 1.200 bar, mit dessen Hilfe die verdichtete Masse durch die Auslassdüse über das Angusssystem des Werkzeugs in den Hohlraum des Werkzeugs gedrückt wurde.

In der Form härtete das Material aus und erstarrte schließlich. Dann öffnete sich die Auswerferseite des Werkzeugs. Dabei drangen Stifte in die Kavität des Werkzeugs ein und drückten das Formteil aus der Form (Zwangsentformung). Es fiel nun in einen bereitstehenden Behälter. Die gespritzten Teile zeigten eine sehr glatte Oberfläche aber waren aufgrund des sehr hohen Wasseranteils noch sehr flexibel. Der Anguss wurde automatisch abgetrennt. Die hergestellten Formteile liefen anschließend durch einen Trocknungstunnel (Umluft: 85 C°) für 20 Minuten bei einer Länge von 20 Meter durch. Die Restfeuchte wurde den Formteilen auf unter 5%, bevorzugt vollständig entzogen.

Letztlich wurde das Produkt gestapelt und verpackt.

### Beispiel 4: Funktionalitätstest der aus Granulat hergestellten Gebrauchsgegenstände

In diesem Experiment wurden Eigenschaften von Gebrauchsgegenständen hergestellt aus Granulat Variante A mit auf dem Markt erhältlichen biologisch abbaubaren Gebrauchsgegenständen in Bezug auf ihre Zug-/Bruch-/und Reißfestigkeit verglichen. Ferner wurde die Formbeständigkeit und Stabilität in einer Flüssigkeit, hier Wasser, verglichen. Hierzu wurde der Gebrauchsgegenstand Trinkhalm gewählt.

Verglichen wurde ein nach dem hierin offenbarten Verfahren hergestellter Trinkhalm (genannt "BAO Straw") mit einem Trinkhalm aus gehärtetem Nudelteig umfassend Weizenmehl, mit einem essbaren Trinkhalm der Firma Wisefood umfassend gemahlenes ganzes Getreide, Apfelfasern und Stevia ("Wisefood Straw") und mit einem Trinkhalm umfassend Reismehl ("Rice Straw").

In einem ersten Test wurde die Zugfestigkeit bzw. Reißfestigkeit der verschiedenen Trinkhalme getestet. Die Ergebnisse sind **Tabelle 1** zu entnehmen. Gemessen wurde die Zugfestigkeit mit einer Hängewaage. Der Trinkhalm wurde dabei an einem Ende befestigt. Am anderen Ende wurde eine Klemme angebracht an welche eine Hängewaage eingehakt wurde. Es wurde so lange an der Hängewaage gezogen bis der Trinkhalm abriss. Es ist darauf hinzuweisen, dass der Trinkhalm nicht im Bereich der Klemme abriss und nicht lediglich die Klemme abrutschte sondern ein echtes Auseinanderreißen des Materials erfolgte. Die jeweiligen Messwerte wurden vom Messinstrument in Gramm angegeben.

**Tabelle 1**

| **Trinkhalm** | **Zug-Gewicht bei welchem Trinkhalm abriss (in Gramm)** |
|---|---|
| Pasta Straw | 260g |
| Wisefood Straw | 7700g |
| Rice Straw | 740g |
| BAO Straw | 11100g |

In einem zweiten Test wurde die Bruchfestigkeit der verschiedenen Trinkhalme getestet. Die Ergebnisse sind **Tabelle 2** zu entnehmen. Gemessen wurde die Bruchfestigkeit mit einer Hängewaage. Hierzu wurde der Trinkhalm an beiden Enden befestigt. Am freien Mittelstück des Trinkhalms wurde ein Gewicht, unter Verwendung eines Haken, an den Trinkhalm angehängt. Die Masse des Gewichts wurde erhöht bis der Trinkhalm aufgrund des Gewichts brach. Die jeweiligen Messwerte wurden vom Messinstrument in Gramm angegeben.

**Tabelle 2**

| **Trinkhalm** | **Gewicht bei welchem Trinkhalm brach (in Gramm)** |
|---|---|
| Pasta Straw | 500g |
| Wisefood Straw | 410g |
| Rice Straw | 700g |
| BAO Straw | 3910g |

In einem dritten Test wurde die Formbeständigkeit und Stabilität anderer biologisch abbaubarer Trinkhalme bei Kontakt mit Flüssigkeiten wie Wasser mit der Beständigkeit von Trinkhalmen hergestellt aus Granulat der Variante A verglichen. Die Ergebnisse sind **Tabelle 3** zu entnehmen, sowie **Abbildungen 1A-D** bis **5A-D.** Hierfür wurden die Trinkhalme "Pasta Straw", "Wisefood Straw", "Rice Staw" und ein Trinkhalm ("Bao Straw") über einen Zeitraum von 24 Stunden jeweils in ein Glas Wasser gestellt und deren Aufquellen in der Flüssigkeit gemessen.

Der BAO Trinkhalm hat im Vergleich zu den anderen Trinkhalmen, in den herkömmlichen Gebrauchsstunden von bis zu 2 Stunden am besten abgeschnitten. Dieser quoll im Verhältnis zu den anderen, nicht auf und es konnte noch problemlos daraus getrunken werden. Auch das Wasser veränderte sich nicht optisch, was bei den anderen Trinkhalmen zu beobachten war, und trug im Gegensatz zu den anderen Trinkhalmen, zu keinem bemerkbaren Eigengeschmack bei. Dieser Zustand war bis zu 6 Stunden in Wasser stabil. Somit ist zu sagen, dass der BAO Trinkhalm ohne Probleme 6 Stunden nutzbar ist. Die anderen getesteten Trinkhalme sind bereits nach 30 Minuten weich geworden und eine Verwendung als Trinkhalm war nach 30 Minuten im Wasser nicht mehr möglich.

**Tabelle 3**

| **Wasserkontakt Zeit** | **Trinkhalm** | **Beobachtung** | **Abbildung** |
|---|---|---|---|
| **10 Minuten** | Pasta Straw | Leicht aufgequollen. Noch stabil. | 1A |
| | Wisefood Straw | Leicht aufgequollen. Noch stabil. | 1B |
| | Rice Straw | Leicht aufgequollen. Noch stabil. | 1C |
| | Bao Straw | Unverändert | 1D |
| **30 Minuten** | Pasta Straw | Sichtbar aufgequollen. Leicht biegsam. | 2A |
| | Wisefood Straw | Sichtbar aufgequollen. Leicht biegsam. | 2B |
| | Rice Straw | Stark aufgequollen und gebogen. Sehr glitschig und wackelig. | 2C |
| | Bao Straw | Nahezu unverändert. Lediglich am Ende des Strohhalms ist bei näherer Betrachtung ein leichtes Aufquellen zu sehen. | 2D |
| **60 Minuten** | Pasta Straw | Sehr biegsam, glitschig und weist leichte Risse auf. | 3A |
| | Wisefood Straw | Sehr biegsam, glitschig und weist leichte Risse auf. | 3B |
| | Rice Straw | Extrem glitschig. Lang gezogen und weist einen langen Riss auf. | 3C |
| | Bao Straw | Unverändert zu 30 Minuten. Lediglich die Spitze war bei genauem Betrachten weiter aufgequollen. | 3D |
| **2 Stunden** | Pasta Straw | Fühlt sich im Bereich des Wasserkontakts sehr weich an und leicht glitschig. Beim Biegen entstanden nur kleine Risse. Nasser Nudelgeruch. | 4A |
| | Wisefood Straw | Leicht bis mittelglitschig. Bereich des Wasserkontakts ist abgerissen. Synthetischer Geruch. Schmeckt nach Knete. | 4B |
| | Rice Straw | Extrem glitschig. Beim Biegen kam es zu großen Rissen. Schmeckt nach Reis. | 4C |
| | Bao Straw | Nicht glitschig außer an blasigen Stellen. Geschmacksneutral und immer noch stabil. | 4D |
| **24 Stunden** | Pasta Straw | Die Oberfläche ist vergleichbar mit dem Zustand nach 2 Stunden. Nach Bewegen des Strohhalms deutlich mehr Risse. Oberfläche lässt sich langsam an zu lösen und emigriert ins Wasser. | 5A |
| | Wisefood Straw | Die Oberfläche ist vergleichbar mit dem Zustand nach 2 Stunden. Nach Bewegen des Strohhalms deutlich mehr Risse. | 5B |
| | Rice Straw | Noch glitschiger als die Pasta Straws. Oberfläche noch nicht gelöst. | 5C |
| | Bao Straw | Nicht mehr formstabil und bereits sehr zersetzt | 5D |

Interessanterweise konnte beobachtet werden, dass der Zersetzungsprozess in Wasser bei Trinkhalmen der vorliegenden Offenbarung (Bao Straw/Bao Trinkhalm) zunächst sehr langsam, aber nach ca. 6 Stunden sehr schnell einsetzte und erfolgte, sodass die Auflösung des Trinkhalms, d.h. die Zersetzung in seine Bestandteile und der dadurch bewirkte Zerfall des Trinkhalms, früher als die der anderen getesteten Trinkhalme erreicht wurde. Nach 24 Stunden war der Trinkhalm der vorliegenden Offenbarung bereits so stark zersetzt, dass er schon bei sehr geringem Druck, zum Beispiel zwischen zwei Fingern, zerrieben werden konnte. Insgesamt weist der Trinkhalm der vorliegenden Offenbarung über einen ersten Zeitraum eine längere Beständigkeit in Wasser und somit eine längere Einsatzdauer/Verwendung des Trinkhalms auf, wobei dann nach der üblichen Gebrauchsdauer eine sehr schnellere (Komplett-)Zersetzung im Vergleich zu anderen biologisch abbaubaren Trinkhalmen einsetzt.

### VIII. Spezielles Granulat und daraus hergestellte Folie (Foliengranulat) - nicht zur Erfindung gehörend Granulat

Das Granulat bevorzugt hergestellt aus Varianten J und K wird zur Herstellung von Bio-Folien verwendet. Folgende Varianten J und K unterscheiden sich vom zuvor beschriebenen Granulat in ihrer Zusammensetzung darin, dass der Massenanteil der Stärke im Granulat überwiegt. Der Flüssigkeitsanteil ist hier sehr hoch und auch das Granulat muss eine Restfeuchte von 30-40%, bevorzugt von 35% haben, um für die Herstellung von Folien dienen zu können. Das Granulat weißt also eine Restfeuchte von 30-40% auf und hat eine Feststoffzusammensetzung von

| | |
|---|---|
| Stärke | 80-85% |
| Dickungs- und/oder Geliermittel | 15-20% |
| Optionale Zusätze | 0-5% |

bevorzugter von

| | |
|---|---|
| Stärke | 80% |
| Dickungs- und/oder Geliermittel | 18-20% |
| Optionale Zusätze | 0-2%. |

Die pflanzliche Stärke im Granulat ist native, unbehandelte Stärke und umfasst Weizenstärke, Kartoffelstärke, Maisstärke, Tapiokastärke oder Stärke aus Maniok, Knollenbohne, Batate, Yamswurzel, Knollen-Platterbse, Arakacha, Knolligem Sauerklee, Knolliger Kapuzinerkresse, Ulluco, Ostindischer Pfeilwurz, Pfeilwurz, Achira, Taro, Tannia, Weißer Seerose, Gelber Teichrose oder Chayote oder eine Mischung, bevorzugt Weizenstärke, Kartoffelstärke, Maisstärke, Reisstärke, Tapiokastärke oder eine Mischung davon.

Das Dickungs- und/oder Geliermittel im Granulat umfasst Guarkernmehl, Xanthan Gum, Teufelszunge, Agar-Agar, Pektin, Carrageen, Alginat, Johannisbrotkernmehl, Sago, Gummi Arabicum, Reismehl, Hartweizenmehl oder Hartweizengrieß oder eine Mischung davon.

Bevorzugt hat das Granulat eine Restfeuchte von 30-40% und hat eine Feststoffzusammensetzung aus Weizenstärke, Guarkernmehl und Xanthan.

Das Granulat kann zusätzlich eine oder mehrere der folgenden Zusätze umfassen.

Das Granulat kann zusätzlich pflanzliches Glycerin und/oder Sorbit umfassen. Durch die Zugabe von Glycerin kann die Flexibilität des Granulats und daraus hergestellter Produkte gesteigert werden. Alternativ zu Glycerin kann das Granulat Sorbit umfassen.

Das Granulat kann zusätzlich Wachs, bevorzugt Rapswachs, Sojawachs oder Carnaubawachs, am bevorzugtesten Rapswachs als Feststoff umfassen. Die Anwesenheit von Wachs im Granulat führt dazu, dass daraus hergestellte Folienprodukte eine höhere Resistenz gegen Flüssigkeiten wie Wasser, Öle und Fette aufweist. Der Zusatz von Wachs im Granulat kann die Stabilität des Produkts beim Kontakt mit einer Flüssigkeit um mindestens 10%, mindestens 20%, mindestens 25%. mindestens 30% oder sogar mehr als 30% steigern.

Zudem kann das Granulat zusätzlich auch Naturkautschuk/Naturlatex/Naturlatexmilch umfassen. Naturkautschuk erhöht die Resistenz des Granulats und der daraus erzeugten Folienprodukte gegenüber Wasser, Fett und Öl. Der Zusatz des höchst widerstandsfähigen Naturkautschuk im Granulat kann die Stabilität des Produkts beim Kontakt mit einer Flüssigkeit um mindestens 10%, mindestens 20%, mindestens 25%, mindestens 100% oder sogar mehr als 100% steigern. Naturkautschuk kann auch als Hauptbestandteil einer Beschichtung der aus dem Granulat hergestellten Folienprodukte dienen.

Das Granulat kann zusätzlich ein weiteres Biopolymer wie Zellulose umfassen . Auch Biopolymere erhöhen die Resistenz der aus dem Granulat erzeugten Produkte gegenüber Wasser, Fett und Öl. Der Zusatz von höchst widerstandsfähigen Biopolymeren im Granulat kann die Stabilität des daraus hergestellten Produkts beim Kontakt mit einer Flüssigkeit um mindestens 10%, mindestens 20%, mindestens 25%, mindestens 100% oder sogar mehr als 100% steigern.

Das Granulat kann zudem Öl, bevorzugt Nuss- oder Rapsöl umfassen. Öl verbessert die Fließeigenschaften der Rohmasse während der Herstellung zu Granulat als auch des Granulats während der Herstellung des Produkts.

Das Granulat kann zudem ein oder mehrere Konservierungsstoffe enthalten. Durch Beimischen von Konservierungsstoffen zum Material des Granulats kann einem Schimmeln des erzeugten Granulats oder Folienprodukts entgegengewirkt werden. Konservierungsstoffe umfassen E 220 Schwefeldioxid/schweflige Säure, E 221 Natriumsulfit, E 222 Natriumhydrogensulfit, E 223 Natriumdisulfit, E 224 Kaliumdisulfit, E 226 Calciumsulfit, E 227 Calciumhydrogensulfit, E 228 Kaliumhydrogensulfit oder eine Mischung davon. Diese Konservierungsstoffe sind als Lebensmittel Zusatzstoffe gelistet, die neben den klassischen Eigenschaften eines Konservierungsstoffs zudem auch dem Abbau von optional im Granulat vorhandenen Farbstoffen, Vitaminen, Duftstoffen und Aromen durch Sauerstoffeinfluss entgegenwirken. Somit bleibt die allgemeine Haltbarkeit des Granulats sowie des daraus hergestellten Produkts länger erhalten.

Ferner kann das Granulat zusätzlich Essig und/oder Lecithin umfassen. Essig und Lecithin werden als Bindemittel der Inhaltsstoffe des Granulats verwendet. Die einzelnen Inhaltsstoffe des Granulats können also durch Zugabe von Essig und Lecithinen besser und homogener miteinander verbunden werden.

Optional kann das Granulat Lebensmittelfarbe, herkömmlicher Aromen bevorzugt ätherischer Öle, Düfte, Geschmäcker und dergleichen zugegeben werden. Dies ist etwa bei der Herstellung von Biomüllbeuteln vorteilhaft.

Das vorliegende Granulat umfasst ferner keine Biokunststoffe, keine biobasierten Kunststoffe und keine erdölbasierten Biopolymere. Unter Biokunstsoffen werden alle Biopolymere die durch chemische Veränderung der natürlichen und/oder pflanzlichen Rohstoffe gewonnen werden verstanden. Auch bestimmte erdölbasierte Polymere sind biologisch abbaubar und daher per Definition "Biopolymere". Erdölbasiere Polymere umfassen Polyvinylalkohol (PVA), Polybutylenadipat-terephthalat (PBAT), Polybutylensuccinat (PBS), Polycaprolactone (PCL) und Polyglycolid (PGA). Erdölbasierte Polymere werden vorliegend nicht verwendet und sind kein Bestandteil des Granulats oder der daraus gewonnenen Gebrauchsgegenstände. Biobasierte Kunststoffe, die durch umfassende chemische Veränderung der biogenen Rohstoffe hergestellt wurden (z. B. Polylactide (PLA) aus mit Hilfe der weißen Biotechnologie erzeugter Milchsäure), werden nicht vom Granulat oder den daraus hergestellten Gebrauchsgegenständen umfasst. Ferner zählen neben Polylactid (PLA), auch Polyhydroxyalkanoate (PHA), Polyhydroxybutyrat (PHB), Epoxyacylate und Stoffe auf Ligninbasis wie Thermoplaste zu den biobasierten Kunststoffen.

Sämtliche Inhaltsstoffe des hierin beschriebenen Granulats sind für den Hautkontakt und den Kontakt mit Lebensmitteln geeignet und ein Verzehr des Granulats von Mensch und Tier ist nicht schädlich für den Organismus.

Bei einer Restfeuchte von 30-40% kann das Granulat kann in folgenden bevorzugten Varianten vorliegen:
Variante J:

| | |
|---|---|
| Kartoffelstärke | 80% |
| Pektin | 18% |
| E 221 Natriumsulfit | 1% |
| Lebensmittelfarbe Blau (Spirulina) | 1% |

Variante K:

| | |
|---|---|
| Kartoffelstärke | 85% |
| Pektin | 15% |

Hergestellt wird das Granulat aus einer Mischung bestehend aus:

| | |
|---|---|
| Stärke | 30-50% |
| Dickungs- und/oder Geliermittel | 3-10% |
| Optionale Zusätze | 0-5% |

Bezogen auf das Gewicht dieser Mischung

| | |
|---|---|
| Pflanzliches Glycerin (100%ige Lösung) | 10-20% |
| Wasser | 30-50% |

Hergestellt wird das Granulat bevorzugt aus einer Mischung bestehend aus:
Variante J:

| | |
|---|---|
| Kartoffelstärke | 38% |
| Pektin | 4,6% |
| E 221 Natriumsulfit | 1% |
| Lebensmittelfarbe Blau (Spirulina) | 1% |
| Pflanzliches Glycerin (100%ige Lösung) | 17,7% |
| Wasser 60°C | 37,7% |

Variante K:

| | |
|---|---|
| Kartoffelstärke | 40% |
| Pektin | 4,6% |
| Pflanzliches Glycerin (100%ige Lösung) | 17,7% |
| Wasser 60°C | 37,7% |

Schritte a) bis d) des Herstellungsverfahrens für das Granulat wie zuvor beschrieben, gelten entsprechend. Einziger Unterschied: die Mischung zur Herstellung des Foliengranulats erfolgt in Schritt a) in einem einzigen Mischvorgang.

### Weiterverarbeitung des Granulats mittels Blasfolien-Extrusion

Das Granulat kann als Ausgangsmaterial zur Herstellung von biologisch abbaubaren, bevorzugt kompostierbaren Folien und Folienprodukten dienen.

Das Granulat kann dabei als alleiniges Ausgangsmaterial zur Herstellung von biologisch abbaubaren, bevorzugt kompostierbaren Folien und Folienprodukten dienen.

Um dünne Folien zu blasen wird ein Extruder mit einer Ringdüse kombiniert. Das Granulat wird wie oben beschrieben über einen Einfülltrichter in einen Zylinder umfassend eine Schnecke eines Extruders gegeben. Die Masse wird homogenisiert und verdichtet. Die Heizbänder des Zylinders sind auf 90°C, 95°C, 110°C, 110°C, 105°C eingestellt. Die Düse weist bevorzugt eine Temperatur von 160°C auf. Die verdichtete Masse wird im Schlauchkopf zwischen Extruder und Ringdüse zu einem Schlauch ausgeformt und durch die Düse nach oben ausgestoßen. Dort wird der Materialschlauch mit Luft auf ein Mehrfaches des ursprünglichen Durchmessers aufgeblasen und mit erhöhter Geschwindigkeit nach oben abgezogen. Nicht nur der Zug in Längs- und Querrichtung, sondern auch der Zeitpunkt des Abkühlens entscheidet über die Foliendicke.

### Produkte

Aus dem in diesem Kapitel beschriebenen Granulat kann Folie und Folienprodukte, welche biologisch abbaubar, bevorzugt kompostierbar sind, hergestellt werden. Die so hergestellte Folie und Folienprodukte sind bevorzugt biologisch abbaubar und kompostierbar noch bevorzugter biologisch abbaubar und gartenkompostierbar Die Folie und die Folienprodukte sind bevorzugt für den Hautkontakt und Lebensmittelkontakt geeignet.

Das aus dem Granulat hergestellte Produkt ist eine Folie. Die Dicke der Folie ist variabel. Die Dicke der Folie kann 0,001-2 mm, bevorzugt 0,005-1 mm, noch bevorzugter 0,005-0,5 mm sein. Die Folie kann für eine Vielzahl von Verwendungszwecken verwendet werden. Erzeugnisse aus geblasenen Folien sind beispielsweise Verpackungen, Müllsammelsäcke und Beutel für Biomüll, Hygienefolien für Windeln, Versandhüllen, Einmalhandschuhe und Tragetaschen. Die Folie kann z.B. als Frischhaltefolie zum Abdecken von Lebensmitteln dienen, oder als Geschenkefolie zum Verpacken von Geschenken verwendet werden.

In einer speziellen Ausführungsform ist das Produkt eine Tragetasche. Die Tragetasche kann flächig oder netzartig sein. Die Größe der Tragetasche ist variabel. Die Tasche kann eine Länge von 5-100 cm, bevorzugt 10-70 cm, noch bevorzugter 10-50 cm aufweisen. Die Tasche kann eine Breite von 5-100 cm, bevorzugt 10-70 cm, noch bevorzugter 10-50 cm aufweisen. Die Dicke der Seitenwand ist variabel. Die Dicke der Seitenwand kann 0,001-5 mm, bevorzugt 0,005-5 mm. noch bevorzugter 1-3 mm aufweisen.

Die Tragetasche hat eine Vielzahl von Verwendungsmöglichkeiten. Die Tasche kann z.B. als Einkaufstasche, Obst- oder Gemüsetüte, Müllbeutel, Gefrierbeutel verwendet werden.

### Beispiele

### Beispiel 5: Herstellung von Granulat Variante J und einer daraus hergestellten Folientüte

Das Ausgangsmaterial für das Granulat bestand aus 38% Kartoffelstärke, 4,6% Pektin, 1% Natriumsulfit, 1% Lebensmittelfarbe, 17,7% pflanzliches Glycerin (100%ige Lösung), 37,7% Wasser bei 60°C.

Das Ausgangsmaterial wurde in einem beheizten Mischer (95°C) zu einer Mischung verrührt, bis sich eine homogene Masse bildete (ca. 10 - 15 Minuten).

Anschließend wurde die zähflüssige Masse direkt in einen Extruder gegossen. Dieser zog die erzeugte Masse ein, verdichtete und "plastifizierte" sie unter Energiezufuhr und sorgte gleichzeitig für eine homogene Mischung. Die beheizte Förderschnecke mit fünf Heizelementen (in der Reihenfolge 90°C, 95°C, 110°C, 110°C, 105°C) führte die Masse zu den Düsen (160°C) und presste die Masse heraus. Auf diese Weise wurde die Masse zu Strängen geformt und auf einem Förderband, das durch Ventilatoren führt, abgekühlt. Die erzeugten Stränge wurden nun mit einer Klinge zu Granulat geschnitten. Hierbei wurde die Klinge mit Wasser gekühlt. So wurde ein linsenförmiges Granulat erzeugt. Dieses härtete anschließend für 2 Tage aus.

Zur Herstellung der Tüten wurde das gefertigte Granulat wiederum über einen Trichter in einen Extruder eingefüllt und bei 120 °C verdichtet und vernetzt. Letztlich trat die Masse aus einer Ringdüse in Form eines geschlossenen Folienschlauchs aus, der nach oben abgeführt wurde. Durch den Austritt aus der Ringdüse und das anschließende Aufblasen des Schlauches mit Kühlluft wurde die Folie biaxial orientiert. Dadurch kühlte der Folienschlauch auf Zimmertemperatur ab und erhielt seine endgültige Dicke, Stabilität und Reißfestigkeit. Die Tütenabschnitte wurden mittels zwei beheizten Metallstäben (160°C) geformt, welche das Folienmaterial im Bereich der Stäbe vernetzen. Die Folie wurde dann über Rollen weiter transportiert. Nach Durchlaufen der Rollen wurde die Folie zu einer Rolle aufgerollt.

Im nächsten Schritt wurde die Folie mit Sojawachs besprüht. Das Wachs wurde dazu auf 80 °C erhitzt. Nach dem Abkühlen wurde die Folie ein weiteres Mal aufgerollt. Das Besprühen erzeugte eine raue Oberflächenschicht, welche sich für das Bedrucken der Folie eignet.

Anschließend wurde die Folie zu einer Stanz-Maschine transportiert und ein Griff ausgestanzt. Erst jetzt wurde die Folien-Bahn zu einzelnen Tüten geschnitten und diese durch im Kreis rotierende Metall- Stangen gestapelt.

### Beispiel 6: Herstellung eines Deckels durch Thermoformen

Das Granulat wurde wie in Beispiel 4 beschrieben hergestellt.

Anschließend wurde das Granulat "in-line" direkt vom Extruder in einen Formautomaten gleichmäßig eingeführt. Nachfolgend wurde die entstandene Folie mittels Heizstäben (120 C°) erwärmt. In der daran anschließenden Werkzeugpartie wurde die erhitzte Folie mittels Spannrahmen eingespannt. Druckluft wurde von oben zugeführt und von unten Vakuum erzeugt. Dies bewirkte, dass die Folie schnell und präzise an die kühle Form-Wand des Deckel-Werkzeuges gedrückt wurde. Die nun eine starre und feste Folie wurde mittels Zwangs-Entformen vom Formwerkzeug getrennt und anschließend ausgestanzt. Somit erhielt man einen Deckel.

### IX. Spezielles Granulat und daraus hergestellte stvroporähnliche Gebrauchsgegenstände (Styroporgranulat) - zur Erfindung gehörend

### Granulat

Aus diesem Granulat können Produkte mit styroporartigen Eigenschaften hergestellt werden.

Das hierin beschriebene Granulat, besonders folgende Varianten L-Q unterscheiden sich vom zuerst beschriebenen Granulat in ihrer Zusammensetzung darin, dass der Massenanteil der Stärke im Granulat überwiegt. Der Flüssigkeitsanteil ist auch hier sehr hoch und muss eine Restfeuchte von 30-40%, bevorzugt von 35% aufweisen, um für die Herstellung von styroporähnlichen Produkten dienen zu können. Das Granulat hergestellt aus Varianten L-Q wird beispielsweise zur Herstellung von isolierenden Trinkbechern oder Verpackungs-"Styropor" verwendet. Es ist darauf hinzuweisen, dass dieses Granulat nicht sehr formstabil ist. Eine Lagerung in Säcken würde dazu führen, dass sich die untersten Granulat-Körner durch das Gewicht der darüber liegenden Granulat-Körner zu einer teigartigen Masse verformen und vernetzen. Eine längere Lagerung ist daher nicht bevorzugt. Dennoch kann auch vernetztes Granulat zur weiteren Verarbeitung problemlos herangezogen werden. Es ist lediglich nicht riesel-/oder streufähig.

Das Granulat bestehend aus natürlichen, bevorzugt rein pflanzlichen Bestandteilen umfassend Stärke und pflanzliche Naturfasern und weist eine Feststoffzusammensetzung bestehend aus

| | |
|---|---|
| Pflanzliche Stärke | 75-90% |
| Naturfasern | 1-10% |
| Dickungs- und/oder Geliermittel | 0-10% |
| Optionale Zusätze | 0-10% auf, |

wobei das Granulat eine Restfeuchte von 30-40% aufweist.

In einer bevorzugten Ausführungsform weist das Granulat eine Feststoffzusammensetzung bestehend aus

| | |
|---|---|
| Pflanzliche Stärke | 80-90% |
| Naturfasern | 8-10% |
| Optionale Zusätze | 0-2% auf |

und hat eine Restfeuchte von 30-40%.

Die pflanzliche Stärke im Granulat ist native, unbehandelte Stärke und umfasst Weizenstärke, Kartoffelstärke, Maisstärke, Tapiokastärke oder Stärke aus Maniok, Knollenbohne, Batate, Yamswurzel, Knollen-Platterbse, Arakacha, Knolligem Sauerklee, Knolliger Kapuzinerkresse, Ulluco, Ostindischer Pfeilwurz, Pfeilwurz, Achira, Taro, Tannia, Weißer Seerose, Gelber Teichrose oder Chayote oder eine Mischung, bevorzugt Weizenstärke, Kartoffelstärke, Maisstärke, Reisstärke, Tapiokastärke oder eine Mischung davon.

Die Naturfasern im Granulat sind rein pflanzliche Fasern umfassend Strohfasern, Grasfasern, Zellstoff, Holzstoff und Fasern des Baobabbaumes. Bevorzugt ist der Zellstoff und/oder Holzstoff zumindest teilweise aus Baobab- oder Bambuspflanzenmaterial hergestellt. Die pflanzlichen Naturfasern erhöhen die mechanische Stabilität und Bruchfestigkeit des Granulats und der daraus erzeugten Produkte und kann so das Abknicken, Splittern oder Zerreißen der Produkte verhindern. Das Granulat der vorliegenden Erfindung enthält bis zu 10% Zellstoff, Holzstoff oder pflanzliche Fasern. Ein höherer Gehalt würde die Weiterverarbeitung zu Produkten verkomplizieren, da die erzeugten Produkte zu spröde würden. Besonders gute mechanische Eigenschaften ergeben sich bei einem Gehalt von 4-10%. Im Vergleich zu Holzstoff hat Zellstoff den Vorteil, dass erzeugte Produkte eine höhere Transparenz aufweisen. Dabei ist eine Faserlänge von 0,7-1,1mm optimal. Längere Fasern können den Quellprozess des Granulats sowie die Vernetzung der Rohstoffe im Granulat bei der weiteren Verarbeitung des Granulats also beim Herstellen eines gewünschten Produktes verzögern oder ganz verhindern. Kürzere Fasern haben keinen Effekt auf eine erhöhte Stabilität des Endprodukts.

Das Granulat kann zusätzlich einen oder mehrere der folgenden Zusätze umfassen.

Das Granulat kann optional pflanzliches Dickungs- und/oder Gelierungsmittel umfassend Guarkernmehl, Xanthan Gum , Agar-Agar, Pektin, Carrageen, Alginat, Johannisbrotkernmehl, Sago, Gummi Arabicum, Reismehl, Hartweizenmehl oder Hartweizengrieß oder eine Mischung davon enthalten.

Bevorzugt ist das Dickungsmittel Guarkernmehl und Xanthan Gum, Teufelszunge, Agar Agar oder Pektin, am meisten bevorzugt ist eine Mischung aus Guarkernmehl und Xanthan Gum.

Das Granulat kann zusätzlich pflanzliches Glycerin und/oder Sorbit umfassen. Hierbei wird Glycerin bevorzugt als Lösung verwendet, kann aber auch in trockener Form dem Flüssigkeitsanteil beigemengt werden. Pflanzliches Glycerin weist wasserspeichernde Eigenschaften auf. Es wird als Feuchtigkeitsspender und Weichmacher verwendet. Durch die Zugabe von Glycerin kann die Flexibilität des Granulats und daraus hergestellter Produkte gesteigert werden. Alternativ zu Glycerin kann die Mischung Sorbit umfassen.

Ferner kann das Granulat zusätzlich Wachs, bevorzugt Rapswachs, Sojawachs oder Carnaubawachs, am bevorzugtesten Rapswachs als Feststoff umfassen. Die Anwesenheit von Wachs im Granulat führt dazu, dass daraus hergestellte Produkte eine höhere Resistenz gegen Flüssigkeiten wie Wasser, Öle und Fette aufweist. Der Zusatz von Wachs im Granulat kann die Stabilität des Produkts beim Kontakt mit einer Flüssigkeit um mindestens 10%, mindestens 20%, mindestens 25%. mindestens 30% oder sogar mehr als 30% steigern.

Zudem kann das Granulat zusätzlich auch Naturkautschuk/Naturlatex/Naturlatexmilch umfassen. Naturkautschuk erhöht die Resistenz des Granulats und der daraus erzeugten Produkte gegenüber Wasser, Fett und Öl. Der Zusatz des höchst widerstandsfähigen Naturkautschuk im Granulat kann die Stabilität des Produkts beim Kontakt mit einer Flüssigkeit um mindestens 10%, mindestens 20%, mindestens 25%, mindestens 100% oder sogar mehr als 100% steigern. Naturkautschuk kann auch als Hauptbestandteil einer Beschichtung der aus Granulat hergestellten Produkte dienen.

Das Granulat kann zusätzlich ein weiteres Biopolymer umfassen. Auch Biopolymere erhöhen die Resistenz der aus dem Granulat erzeugten Produkte gegenüber Wasser, Fett und Öl. Der Zusatz von höchst widerstandsfähigen Biopolymeren im Granulat kann die Stabilität des daraus hergestellten Produkts beim Kontakt mit einer Flüssigkeit um mindestens 10%, mindestens 20%, mindestens 25%, mindestens 100% oder sogar mehr als 100% steigern.

Das Granulat kann zudem Öl, bevorzugt Nuss- oder Rapsöl umfassen. Öl verbessert die Fließeigenschaften der Rohmasse während der Herstellung zu Granulat als auch des Granulats während der Herstellung des Produkts.

Das Granulat kann zudem ein oder mehrere Konservierungsstoffe enthalten. Durch Beimischen von Konservierungsstoffen zum Material des Granulats kann einem Schimmeln des erzeugten Granulats oder Produkts entgegengewirkt werden. Konservierungsstoffe umfassen E 220 Schwefeldioxid/schweflige Säure, E 221 Natriumsulfit, E 222 Natriumhydrogensulfit, E 223 Natriumdisulfit, E 224 Kaliumdisulfit, E 226 Calciumsulfit, E 227 Calciumhydrogensulfit, E 228 Kaliumhydrogensulfit oder eine Mischung davon. Diese Konservierungsstoffe sind als Lebensmittel Zusatzstoffe gelistet, die neben den klassischen Eigenschaften eines Konservierungsstoffs zudem auch dem Abbau von optional im Granulat vorhandenen Farbstoffen, Vitaminen, Duftstoffen und Aromen durch Sauerstoffeinfluss entgegenwirken. Somit bleibt die allgemeine Haltbarkeit des Granulats sowie des daraus hergestellten Produkts länger erhalten.

Ferner kann das Granulat zusätzlich Essig und/oder Lecithin umfassen. Essig und Lecithin werden als Bindemittel der Inhaltsstoffe des Granulats verwendet. Die einzelnen Inhaltsstoffe des Granulats können also durch Zugabe von Essig und Lecithinen besser und homogener miteinander verbunden werden.

Das Granulat kann zusätzlich ein pflanzliches Stearat wie Magnesiumstearat, Calciumstearat, Zinkstearat und/oder Aluminiumtristearat umfassen. Magnesiumstearat, Calciumstearat, Zinkstearat und Aluminiumtristearat werden als Gleit- oder Schmiermittel verwendet. Das Granulat bzw. Produkte aus diesem sind somit weniger adhärent und lassen sich leichter z.B. aus Gussformen lösen. In manchen Ausführungsformen umfasst das Granulat bevorzugt zwischen 0,25 und 5%, bevorzugt 1% Magnesiumstearat, 0,1-0,2% Calciumstearat, 0,1-0,4% Zinkstearat und/oder 1,6% Aluminiumtristearat.

Optional kann das Granulat Lebensmittelfarbe, herkömmlicher Aromen bevorzugt ätherischer Öle, Düfte, Geschmäcker und dergleichen zugegeben werden.

Das Granulat umfasst kein Bioplastik, keine chemisch veränderten (Bio-)Polymere umfassend biobasierte Polymere umfassend Polylactid (PLA), Polyhydoxyalkanoate (PHA), Polyhydroxybutyrat (PHB), und keine erdölbasierten Biopolymere. Das vorliegende Granulat umfasst also keine Biokunststoffe, keine biobasierten Kunststoffe und keine erdölbasierten Biopolymere. Unter Biokunstsoffen werden alle Biopolymere die durch chemische Veränderung der natürlichen und/oder pflanzlichen Rohstoffe gewonnen werden verstanden. Auch bestimmte erdölbasierte Polymere sind biologisch abbaubar und daher per Definition "Biopolymere". Erdölbasiere Polymere umfassen Polyvinylalkohol (PVA), Polybutylenadipat-terephthalat (PBAT), Polybutylensuccinat (PBS), Polycaprolactone (PCL) und Polyglycolid (PGA). Erdölbasierte Polymere werden vorliegend nicht verwendet und sind kein Bestandteil des Granulats oder der daraus gewonnenen Gebrauchsgegenstände. Biobasierte Kunststoffe, die durch umfassende chemische Veränderung der biogenen Rohstoffe hergestellt wurden (z. B. Polylactide (PLA) aus mit Hilfe der weißen Biotechnologie erzeugter Milchsäure), werden nicht vom Granulat oder den daraus hergestellten Gebrauchsgegenständen umfasst. Ferner zählen neben Polylactid (PLA), auch Polyhydroxyalkanoate (PHA), Polyhydroxybutyrat (PHB), Epoxyacylate und Stoffe auf Ligninbasis wie Thermoplaste zu den biobasierten Kunststoffen.

Sämtliche Inhaltsstoffe des Granulats der vorliegenden Erfindung sind für den Hautkontakt und den Kontakt mit Lebensmitteln geeignet und ein Verzehr des Granulats von Mensch und Tier ist nicht schädlich für den Organismus.

Bevorzugte Varianten dieses Granulats weisen neben einer Restfeuchte von 30-40% folgende Feststoffzusammensetzung auf
Variante L:

| | |
|---|---|
| Weizenstärke | 89% |
| Natur-Fasern | 10% (bevorzugt in einer Länge von 1,9mm) |
| Magnesiumstearat | 1% |

Variante M:

| | |
|---|---|
| Weizenstärke | 89% |
| Natur-Fasern | 9% (bevorzugt in einer Länge von 1 mm) |
| Magnesiumstearat | 1% |
| Lebensmittelfarbe (Spirulina) | 1% |

Variante N:

| | |
|---|---|
| Weizenstärke | 80% |
| Guarkernmehl | 9% |
| Natur-Fasern | 9% (bevorzugt in einer Länge von 0,9 mm) |
| Magnesiumstearat | 1% |
| Lebensmittelfarbe (Spirulina) | 1% |

Variante O:

| | |
|---|---|
| Weizenstärke | 80% |
| Guarkernmehl | 6% |
| Xanthan Gum | 3% |
| Natur-Fasern | 9% (bevorzugt in einer Länge von 1,2 mm) |
| Magnesiumstearat | 1% |
| Lebensmittelfarbe (Spirulina) | 1% |

Variante P:

| | |
|---|---|
| Weizenstärke: | 80% |
| Zellstoff: | 9% |
| Magnesiumstearat: | 1% |

Variante Q:

| | |
|---|---|
| Weizenstärke: | 80% |
| Pflanzen Fasern: | 9% |
| Magnesiumstearat: | 1% |

### Herstellung des Granulats

Hergestellt wird das Granulat aus einer Mischung bestehend aus:

| | |
|---|---|
| Stärke | 75-90% |
| Natur-Fasern | 1-10% |
| Dickungs- und/oder Geliermittel | 0-10% |
| Optionale Zusätze | 0-10% |

Bezogen auf das Gewicht dieser Mischung

| | |
|---|---|
| Flüssige Bestandteile umfassend Wasser | 70-80% |

Bevorzugte Varianten der Mischung für die Herstellung dieses Granulats sind:
Variante L:

| | |
|---|---|
| Weizenstärke | 89% |
| Natur-Fasern | 10% (bevorzugt in einer Länge von 1,9mm) |
| Magnesiumstearat | 1% |

Bezogen auf das Gewicht dieser Masse Zugabe von

| | |
|---|---|
| Wasser | 70% |
| Pflanzliches Glycerin | 5% |
| Rapsöl | 4 % |

Variante M:

| | |
|---|---|
| Weizenstärke | 89% |
| Natur-Fasern | 9% (bevorzugt in einer Länge von 1 mm) |
| Magnesiumstearat | 1% |
| Lebensmittelfarbe (Spirulina) | 1% |

Bezogen auf das Gewicht dieser Masse Zugabe von

| | |
|---|---|
| Wasser | 70% |

Variante N:

| | |
|---|---|
| Weizenstärke | 80% |
| Guarkernmehl | 9% |
| Natur-Fasern | 9% (bevorzugt in einer Länge von 0,9 mm) |
| Magnesiumstearat | 1% |
| Lebensmittelfarbe (Spirulina) | 1% |

Bezogen auf das Gewicht dieser Masse Zugabe von

| | |
|---|---|
| Wasser | 70% |

Variante O:

| | |
|---|---|
| Weizenstärke | 80% |
| Guarkernmehl | 6% |
| Xanthan Gum | 3% |
| Natur-Fasern | 9% (bevorzugt in einer Länge von 1,2 mm) |
| Magnesiumstearat | 1% |
| Lebensmittelfarbe (Spirulina) | 1% |

Bezogen auf das Gewicht dieser Masse Zugabe von

| | |
|---|---|
| Wasser | 70% |

Variante P:

| | |
|---|---|
| Weizenstärke: | 80% |
| Zellstoff: | 9% |
| Magnesiumstearat: | 1% |

Bezogen auf die Trockenmasse:

| | |
|---|---|
| Wasser: | 70% |

Variante Q:

| | |
|---|---|
| Weizenstärke: | 80% |
| Pflanzen Fasern: | 9% |
| Magnesiumstearat: | 1% |

Bezogen auf die Trockenmasse:

| | |
|---|---|
| Wasser: | 55% |

Schritte a) bis d) des Herstellungsverfahrens für das Granulat wie zuvor beschrieben, gelten entsprechend.

### Verwendung des Granulats und Herstellung der styroporartigen Produkte

Das Granulat kann als Ausgangsmaterial zur Herstellung von biologisch abbaubaren, bevorzugt kompostierbaren Gebrauchsgegenständen verwendet werden.

Das Granulats kann dabei bevorzugt als alleiniges Ausgangsmaterial zur Herstellung von biologisch abbaubaren, bevorzugt kompostierbaren Gebrauchsgegenständen verwendet werden.

Das fertige Granulat kann auch als Verpackungsmaterial verwendet werden (Verpackungsflocken). Diese styroporähnlichen Verpackungsflocken können eine Restfeuchte von weniger als 30-40% aufweisen, bevorzugt von 2-30%. Dies wird erreicht durch weitere Trocknung der Granulat-Stücke.

Aus dem Granulat können ferner Gebrauchsgegenstände, welche biologisch abbaubar, bevorzugt kompostierbar sind hergestellt werden.

Ein aus dem Granulat hergestellter Gebrauchsgegenstand kann bevorzugt styroporartige Eigenschaften aufweisen und einen styroporartigen Aufbau aufweisen. Das heißt, dass das Material stark geschäumt und in Form gepresst wird und einen leichten, schaumstoffartigen Gegenstand bildet. Die im gepressten Material zurückbleibenden Luftkammern verleihen dem Material isolierende und wärmedämmende Eigenschaften. Das Material kann durch seine Eigenschaften als Dämmstoff oder Verpackungsmaterial verwendet werden. Mit "Styropor" wird hierin ein Vergleich zu "Polystyrol" und dessen Eigenschaften gezogen. Das vorliegende Granulat ist demnach zur Herstellung von Biostyropor/Bioschaumstoff geeignet, welcher vollständig frei von Plastik und Bio-Plastik ist.

Der Gebrauchsgegenstand und das Verpackungsmaterial sind bevorzugt biologisch abbaubar und kompostierbar.

Der Gebrauchsgegenstand hergestellt aus erfindungsgemäßem Granulat und das Verpackungsmaterial sind bevorzugt für den Hautkontakt und Lebensmittelkontakt geeignet.

Der Gebrauchsgegenstand hergestellt aus erfindungsgemäßem Granulat kann ein Becher, eine Verpackungsbox, eine Schale, oder ein Verpackungsbehältnis sein.

Zudem ist sowohl das Granulat als auch die daraus hergestellten Gebrauchsgegenstände gartenkompostierbar. Das Granulat und die daraus hergestellten Gebrauchsgegenstände sind auch ultrakompostierbar.

Die Formen und Gegenstände die aus diesem Granulat bevorzugt hergestellt werden, werden im Spritzgießverfahren wie oben erläutert hergestellt. Bei der Weiterverarbeitung zu einem Produkt ist bei diesen Mischungen zu berücksichtigen, dass eine befördernde Schnecke verwendet wird, die auf zwischen 75°C und 95°C aufgeheizt wird, bevorzugt auf 85°C. Ferner ist zu beachten, dass das Werkzeug eine Temperatur von 220°C-240°C aufweisen sollte. Bevorzugt sind 220°C. Um ein styroporähnliches Produkt zu erhalten wird nur eine geringere Menge an Füllvolumen in die Form eingespritzt, welche dann in der Form aufquillt. Wasserdampf und Gase entweichen. Dies erzeugt ein Material mit niedrigerer Dichte aber mit Lufträumen, welches das Material leichter werden lässt und ihm zugleich hervorragende isolierende Eigenschaften sowie eine geringere Leitfähigkeit verleiht. Somit kann zum Beispiel 80°C heißer Kaffee im Becher vom Verbraucher problemlos in der Hand gehalten werden, ohne dass er sich verbrennt. Bei einem herkömmlichen Kaffeebecher aus beschichteter Pappe wird entweder ein sogenannter "Sleeve" benötigt oder von vorn herein ein doppelwandiger Becher benutzt, um sich nicht an der Hand zu verbrennen. Das Hinzufügen von Fasern kann auch bei einem styroporartigen Produkt die Bruch- und Reißfestigkeit erhöhen.

Der wesentliche Unterschied zu den zuvor beschriebenen Granulaten liegt darin, dass bei dem diesem Material mit höherem Stärkeanteil und geringeren Spritzvolumen in der Form, die Zugabe von Natur-Fasern essentiell für die Funktionalität des Produkts ist. Ohne die zugeführten Fasern, vor allem bei einem Stärkeanteil von über 80%, würde das erzeugte Produkt sehr leicht brechen und der Gebrauchsverwendung nicht standhalten und bei Anwendung in der Hand des Verbrauchers leicht zerbrechen / zerfallen.

### Beispiele

### Beispiel 7: Herstellung von "Styropor-Ersatz" Granulat, sogenannte "Verpackungsflocken" durch Schäumen

Das Ausgangsmaterial zur Herstellung des Granulats entspricht Variante M

| | |
|---|---|
| Weizenstärke | 89% |
| Natur-Fasern | 9% (bevorzugt in einer Länge von 1 mm) |
| Magnesiumstearat | 1% |
| Lebensmittelfarbe (Spirulina) | 1% |

Bezogen auf das Gewicht dieser Masse Zugabe von

| | |
|---|---|
| Wasser | 70% |

Dieses Ausgangsmaterial wurde in einem Mischer (35°C) zu einer Mischung verrührt (10 Minuten).

Anschließend wurde die zähflüssige Masse direkt in einen Twin-Extruder gegossen. Ein Twin-Extruder ist in der Lage, die Masse aufgrund des Verdampfens von Wasser aufzuschäumen.

Der Twin-Extruder zog die Masse ein, verdichtete sie und "plastifizierte" sie unter Energiezufuhr, und sorgte gleichzeitig für eine homogene Mischung. Die beheizte Förderschnecke führte mit fünf Heizelementen (in der Reihenfolge: 70°C - 80°C - 90°C - 100°C - 100°C) die Masse zu den Düsen (ca. 160°C) und presste die Masse heraus. Eine hoch temperierte Düse bei etwa 160°C verursacht ein Aufquellen der extrudierten Masse durch Entweichen von Wasserdampf aus der Masse. Auf diese Weise wurde die Masse zu Strängen mit größeren Lufträumen geformt und auf einem Förderband, das durch einen Ventilatoren-Tunnel führt, abgekühlt. Die erzeugten Stränge wurden nun mit einer Klinge zu größeren Flocken geschnitten. Hierbei wurde die Klinge mit Wasser gekühlt. Somit erhielt man Verpackungsflocken. Das Material erlangt dadurch gute Wärme- und Schalldämpfungseigenschaften und ist sehr leicht.

### Beispiel 8: Herstellung von Granulat für ein isolierendes Produkt (Becher)

Das Ausgangsmaterial für das Granulat entspricht Variante L:

| | |
|---|---|
| Weizenstärke | 89% |
| Naturfasern | 10% (bevorzugt in einer Länge von 1,9mm) |
| Magnesiumstearat | 1% |

Bezogen auf das Gewicht dieser Masse Zugabe von

| | |
|---|---|
| Wasser | 70% |
| Pflanzliches Glycerin | 5% |
| Rapsöl | 4 % |

Das Ausgangsmaterial wurde in einem Mischer zu einer Mischung verrührt, bis sich alle Bestandteile der Mischung gut vermischt haben (ca. 10 - 15 Minuten).

Anschließend wurde die noch pulverige Masse direkt in einen Extruder gegeben. Dieser zog die erzeugte Masse ein, verdichtete und "plastifizierte" sie unter Energiezufuhr und sorgte gleichzeitig für eine homogene Mischung. Der beheizte Kanal der Förderschnecke wurde mit fünf Heizelementen (in der Reihenfolge: 35C° - 60C° - 60C° - 65C° - 25C°) erhitzt und führte die Masse zu den Auslässen und presste die Masse heraus. Auf diese Weise wurde die Masse zu Strängen geformt und auf einem Förderband durch Ventilatoren abgekühlt. Die erzeugten Stränge wurden nun mit einer rotierenden Klinge zu Granulat geschnitten. Hierbei durchlief die Klinge Bürsten, die Sie vor den Schnitt reinigten. So wurde ein linsenförmiges Granulat erzeugt. Im Anschluss härtete das Granulat für 2 Tage aus und wurde schließlich endgültig verpackt.

Das fertige Granulat hat eine Restfeuchte von 30-40% und eine Feststoffzusammensetzung aus

| | |
|---|---|
| Weizenstärke | 89% |
| Natur-Fasern | 10% |
| Magnesiumstearat | 1% |

### Beispiel 9: Herstellung eines isolierenden Produkts (Becher) aus dem Granulat nach Beispiel 7

Das Ausgangsmaterial ist das Granulat aus Beispiel 7(Variante L).

Zur Herstellung eines Spritzgusserzeugnisses wurde das Granulat über einen Einfülltrichter bzw. einen automatischen Zuführer AZ mit Hilfe einer Vakuum-Sauganlage in einer sich im Zylinder der Spritzgießmaschine befindlichen, rotierende Schnecke eingefüllt. Darin wurde das Granulat durch die Rotation in Richtung Schneckenspitze gefördert. Hierbei entstand durch Zerteilen und Scheren des Granulats Friktionswärme, die zusammen mit der Heizung des Zylinders für die Homogenisierung des Granulats sorgte. Die Schnecke sollte eine Förderschnecke sein und auf 85 C° erhitzt werden. Somit wurde die Masse vorverdichtet und homogenisiert

Die Masse staut sich an der Schneckenspitze, wo sich die Auslassdüse befindet, die zu diesem Zeitpunkt geschlossen war. Hierbei entstand Druck auf die Masse. Da die Schnecke axial beweglich ist, schraubte sie sich, ähnlich wie ein Korkenzieher, rückwärts unter dem entstehenden Druck an der Schneckenspitze aus der geschmolzenen Masse heraus. Durch einen Hydraulikzylinder oder mittels elektrischer Steuerung wurde die Rückwärtsbewegung der Schnecke gebremst. Dadurch entstand in der Masse Staudruck. Durch diesen Staudruck in Verbindung mit der Rotation der Schnecke wurde die Masse verdichtet und weiter homogenisiert.

Sobald die Menge der verdichteten Masse für das Volumen des zu fertigenden Werkstücks ausreichte, wurde die Rotation der Schnecke eingestellt und der Dosiervorgang beendet. Zeitgleich erfolgte eine aktive Entlastung der Schnecke, um eine Dekomprimierung der Masse herbeizuführen.

Daraufhin erfolgte das Anfahren der Spritzeinheit an die Schließeinheit. Sie wurde an die Düse angedrückt und die Schnecke wurde zeitgleich rückseitig unter Druck gesetzt. Hierbei entstand ein Druck von circa 1500 bar, mit dessen Hilfe die Masse durch die Düse über das Angusssystem des Werkzeugs in dessen Hohlraum gedrückt wurde. Ein Rückströmen wurde mittels Rückstromsperre verhindert um ein Herausschießen des Materials aufgrund von Wasserverdampfung zu verhindern. Die Form war auf 220 C° erhitzt. Hierbei wurde ein Einspritzvolumen von 20% des Volumens der Form gespritzt, da sich das Material durch die hohe Hitzeeinwirkung ausdehnte und sich der Form anpasste. Zusätzlich entweichen Gase und Wasserdampf über ein Auslassventil der Form. Der Backvorgang dauert ca. 25 Sekunden. Anschließend öffnete sich die Auswerferseite des Werkzeugs. Dabei wurde mittels Luftdruck das Formteil (z.B. Becher) aus der Form getrennt. Anschließend wurden die Becher von einem Roboterarm mittels Saugknöpfen auf Sprühdüsen angebracht, welche das Formteil in einer rotierenden Rückwärts-Bewegung mit einer Emulsion bestehend aus: 25% Naturlatex, 25% Rapswachs und 50% Wasser, beschichtete. Daraufhin wurden die Becher durch einen Trocknungstunnel (Ober-/Unterhitze 65C° für 15 min, 12 Meter) transportiert.

Letztlich wurde das Produkt gestapelt und verpackt. Wir erhielten ein Styropor-/Pappe-ähnliches Produkt, in diesem Fall einen Becher.

## Patentansprüche

1. Granulat bestehend aus natürlichen bevorzugt rein pflanzlichen Bestandteilen umfassend Stärke und pflanzliche Naturfasern **dadurch gekennzeichnet, dass** das Granulat eine Feststoffzusammensetzung bestehend aus
| | |
|---|---|
| Pflanzliche Stärke | 75-90 Gew.-% |
| Naturfasern | 1-10 Gew.-% |
| Dickungs- und/oder Geliermittel | 0-10 Gew.-% |
| Optionale Zusätze | 0-10 Gew.-% aufweist, |
wobei das Granulat eine Restfeuchte von 30-40%, bevorzugt 35% aufweist.

2. Granulat nach Anspruch 1, wobei die Feststoffzusammensetzung aus
| | |
|---|---|
| Pflanzliche Stärke | 80-90 Gew.-% |
| Naturfasern | 8-10 Gew.-% |
| Optionale Zusätze | 0-2 Gew.-% |
besteht und eine Restfeuchte von 30-40% aufweist.

3. Granulat nach Anspruch 1 oder 2, wobei die pflanzliche Stärke native Stärke ist und Weizenstärke, Kartoffelstärke, Maisstärke, Tapiokastärke oder Stärke aus Maniok, Knollenbohne, Batate, Yamswurzel, Knollen-Platterbse, Arakacha, Knolligem Sauerklee, Knolliger Kapuzinerkresse, Ulluco, Ostindischer Pfeilwurz, Pfeilwurz, Achira, Taro, Tannia, Weißer Seerose, Gelber Teichrose oder Chayote, bevorzugt Weizenstärke, Kartoffelstärke, Maisstärke, Reisstärke, Tapiokastärke oder eine Mischung davon umfasst.

4. Granulat nach einem der Ansprüche 1-3, wobei die Naturfasern rein pflanzliche Fasern sind umfassend Strohfasern, Grasfasern, Zellstoff, Holzstoff und Fasern des Baobabbaumes.

5. Granulat nach einem der Ansprüche 1-4, wobei das Dickungs- und/oder Geliermittel Guarkernmehl, Xanthan Gum, Teufelszunge, Agar-Agar, Pektin, Carrageen, Alginat, Johannisbrotkernmehl, Sago, Gummi Arabicum, Reismehl, Hartweizenmehl oder Hartweizengrieß oder eine Mischung davon umfasst.

6. Granulat nach einem der Ansprüche 1-5, wobei die optionalen Zusätze pflanzliches Glycerin und/oder Sorbit, Wachs, Naturkautschuk, Naturlatex, Naturlatexmilch, Biopolymer, Öl, Konservierungsstoffe, Essig, Lecithin, pflanzliches Stearat, Lebensmittelfarbe, Aromen, Duftstoffe und eine Mischung davon umfassen.

7. Granulat nach einem der Ansprüche 1-6, wobei das Granulat kein Bioplastik, keine chemisch veränderten Polymere umfassend biobasierte Polymere umfassend Polylactid (PLA), Polyhydoxyalkanoate (PHA), Polyhydroxybutyrat (PHB), und keine erdölbasierten Biopolymere umfasst.

8. Verfahren zur Herstellung von Granulat nach Ansprüchen 1-7 umfassend die Schritte:
a) Herstellen einer Mischung bestehend aus festen und flüssigen Bestandteilen, wobei die Mischung besteht aus
| | |
|---|---|
| Pflanzliche Stärke | 75-90 Gew.-% |
| Naturfasern | 1-10 Gew.-% |
| Dickungs- oder Geliermittel | 0-10 Gew.-% |
| Optionale Zusätze | 0-10 Gew.-% |
Bezogen auf das Gewicht der Masse zusätzlich:
| | |
|---|---|
| Flüssige Bestandteile umfassend Wasser | 70-80 Gew.-%; |
b) Verdichten der Masse und Formen eines Granulatstrangs;
c) Aushärten und Entfeuchten des in Schritt b) erzeugten Granulatstrangs, wobei im Granulatstrang eine Restfeuchte von 30-40%, bevorzugt 35% zurück bleibt;
d) Schneiden des in c) erzeugten Granulatstrangs zu Granulat.

9. Verfahren nach Anspruch 8, wobei Schritt d) vor Schritt c) erfolgt.

10. Verfahren nach einem der Ansprüche 8 oder 9, wobei Schritt b) in einem Schnecken-Extruder erfolgt.

11. Verwendung des Granulats nach einem der Ansprüche 1-7 zur Herstellung von biologisch abbaubaren, bevorzugt kompostierbaren Gebrauchsgegenständen.

12. Verfahren zur Herstellung von biologisch abbaubaren, bevorzugt kompostierbaren Gebrauchsgegenständen unter Verwendung des Granulats nach einem der Ansprüche 1-7, wobei das Verfahren die Verarbeitung des Granulats im Spritzgussverfahren umfasst.

13. Verfahren nach Anspruch 12, wobei die Herstellung im Spritzgussverfahren bei Temperaturen zwischen 50°C und 100°C erfolgt und wobei optional neben Granulat keine weiteren Zusätze zur Herstellung der Gegenstände benötigt werden.

## Claims

1. Granules consisting of natural, preferably purely plant-based ingredients comprising starch and plant-based natural fibers, **characterized in that** the granules have a solid composition consisting of
| | |
|---|---|
| Plant-based starch | 75-90 wt% |
| Natural fibers | 1-10 wt% |
| Thickener and/or gelling agent | 0-10 wt% |
| Optional additives | 0-10 wt%, |
wherein the granules have a residual moisture content of 30-40%, preferably 35%.

2. The granules according to claim 1, wherein the solid composition consists of
| | |
|---|---|
| Plant-based starch | 80-90 wt% |
| Natural fibers | 8-10 wt% |
| Optional additives | 0-2 wt% |
and has a residual moisture content of 30-40%.

3. The granules according to claim 1 or 2, wherein the plant-based starch is native starch and comprises wheat starch, potato starch, corn starch, tapioca starch, or starch from cassava, tuber bean, batata, yam, tuberous pea, arakacha, tuberous wood sorrel, bulbous nasturtium, ulluco, east Indian arrowroot, arrowroot, achira, taro, tannia, white water lily, yellow pond rose, or chayote, preferably wheat starch, potato starch, corn starch, rice starch, tapioca starch, or a mixture thereof.

4. The granules according to any one of claims 1-3, wherein the natural fibers are purely plant-based fibers comprising straw fibers, grass fibers, wood pulp, pulp and fibers of the baobab tree.

5. The granules according to any of claims 1-4, wherein the thickener and/or gelling agent comprises guar gum, xanthan gum, devil's tongue, agar, pectin, carrageenan, alginate, locust bean gum, sago, gum arabic, rice flour, durum wheat flour or semolina, or a mixture thereof.

6. The granules according to any of claims 1-5, wherein the optional additives comprise plant-based glycerin and/or sorbitol, wax, natural rubber, natural latex, natural latex milk, biopolymer, oil, preservatives, vinegar, lecithin, plant-based stearate, food coloring, flavors, fragrances, and a mixture thereof.

7. The granules according to any of claims 1-6, wherein the granules do not comprise bioplastic, chemically modified polymers comprising bio-based polymers comprising polylactide (PLA), polyhydoxyalkanoates (PHA), polyhydroxybutyrate (PHB), and petroleum-based biopolymers.

8. A method for producing the granules according to any of claims 1-7 comprising the steps of:
a) preparing a mixture consisting of solid and liquid ingredients, said mixture consisting of
| | |
|---|---|
| Plant-based starch | 75-90 wt% |
| Natural fibers | 1-10 wt% |
| Thickener or gelling agent | 0-10 wt%, and |
| Optional additives | 0-10 wt%, |
further comprising based on the weight of the mass:
| | |
|---|---|
| Liquid ingredients comprising water | 70-80 wt%; |
b) compacting the mass and forming a strand;
c) curing and dehumidifying the strand produced in step b), wherein the strand comprises a residual moisture content of 30-40%, preferably 35%; and
d) cutting the strand produced in c) into granules.

9. The method according to claim 8, wherein step d) is performed prior to step c).

10. The method according to claim 8 or 9, wherein step b) is performed in a screw extruder.

11. Use of the granules according to any of claims 1-7 for the production of biodegradable, preferably compostable articles of daily use.

12. A Method for producing biodegradable, preferably compostable articles of daily use from the granules according to any of claims 1-7, wherein the method comprises the processing of the granules by injection molding or extrusion.

13. The method according to claim 12, wherein the production is carried out by injection molding at temperatures of between 50°C and 100°C and wherein optionally no further additives are required in addition to the granules for the production of the articles.

## Revendications

1. Granulés constitués d'éléments naturels de manière préférée d'origine purement végétale comprenant de l'amidon et des fibres naturelles végétales, caractérisés e ce que les granulés présentent une composition de matières solides constituée
d'amidon végétal : 75 - 90 % en poids
de fibres naturelles : 1 - 10 % en poids,
d'épaississants et/ou de gélifiants : a - 10 % en poids
d'additifs optionnels : a - 10 % en poids,
dans lesquels les granulés présentent une humidité résiduelle de 30 - 40 %, de manière préférée de 35 %.

2. Granulés selon la revendication 1, dans lesquels la composition de matières solides est constituée
d'amidon végétal : 80 - 90 % en poids
de fibres naturelles : 8 - 10 % en poids
d'additifs optionnels : 0 - 2 % en poids
et présente une humidité résiduelle de 30 - 40 %.

3. Granulés selon la revendication 1 ou 2, dans lesquels l'amidon végétal est de l'amidon natif et comprend de l'amidon de blé, de l'amidon de pomme de terre, de l'amidon de maïs, de l'amidon de tapioca ou de l'amidon de manioc, de jicama, de patate douce, d'igname, de gesse tubéreuse, d'arracacha, d'herbes tubéreuses, de capucine tubéreuse, d'ulluque, de marante indienne, de marrante, d'achira, de taro, de macabo, de nénuphar blanc, de nénuphar jaune ou de chayote, de manière préférée d'amidon de blé, d'amidon de pomme de terre, d'amidon de maïs, d'amidon de riz, d'amidon de tapioca ou un mélange de ceux-ci.

4. Granulés selon l'une quelconque des revendications 1 à 3, dans lesquels les fibres naturelles sont des fibres purement végétales comprenant des fibres de paille, des fibres d'herbe, de la cellulose, de la pâte à bois et des fibres de baobab.

5. Granulés selon l'une quelconque des revendications 1 à 4, dans lesquels l'épaississant et/ou le gélifiant comprennent de la gomme de guar, de la gomme de xanthane, du konjac, de l'agar-agar, de la pectine, du carraghénane, de l'alginate, de la gomme de caroube, du sagou, de la gomme arabique, de la farine de riz, de la farine de blé dur ou de la semoule ou un mélange de ceux-ci.

6. Granulés selon l'une quelconque des revendications 1 à 5, dans lesquels les additifs optionnels comprennent de la glycérine végétale et/ou du sorbitol, de la cire, du caoutchouc naturel, du latex naturel, du lait de latex naturel, du biopolymère, de l'huile, des agents de conservation, du vinaigre, de la lécithine, du stéarate végétal, des colorants alimentaires, des arômes, des parfums et un mélange de ceux-ci.

7. Granulés selon l'une quelconque des revendications 1 à 6, dans lesquels les granulés ne comprennent aucun bioplastique, aucun polymère modifié chimiquement comprenant des polymères à base biologique comprenant du polylactide (PLA), du polyhydroxyalkanoate (PHA), du polyhydroxybutyrate (PHB), et aucun biopolymère à base de pétrole.

8. Procédé de fabrication de granulés selon les revendications 1 à 7, comprenant les étapes :
a) de fabrication d'un mélange constitué d'éléments solides et liquides, dans lequel le mélange est constitué
d'amidon végétal : 75 - 90 % en poids
de fibres naturelles : 1 - 10 % en poids
d'épaississants ou de gélifiants : a - 10 % en poids
d'additifs optionnels : a - 10 % en poids
par rapport au poids de la matière en supplément :
de l'eau comprenant des éléments liquides : 70 - 80 % en poids ;
b) de compactage de la matière et de moulage d'un brin de granulés ;
c) de durcissement et de déshumidification du brin de granulés produit lors de l'étape b), dans lequel il reste dans le brin de granulés une humidité résiduelle de 30 - 40 %, de manière préférée de 35 % ;
d) de découpe du brin de granulés produit lors de c) en granulés.

9. Procédé selon la revendication 8, dans lequel l'étape d) est effectuée avant l'étape c).

10. Procédé selon l'une quelconque des revendications 8 ou 9, dans lequel l'étape b) est effectuée dans une extrudeuse à vis sans fin.

11. Utilisation des granulés selon l'une quelconque des revendications 1 à 7 pour fabriquer des ustensiles biodégradables, de manière préférée compostables.

12. Procédé de fabrication d'ustensiles biodégradables, de manière préférée compostables, en utilisant les granulés selon l'une quelconque des revendications 1 à 7, dans lequel le procédé comprend la transformation des granulés dans le procédé de moulage par injection.

13. Procédé selon la revendication 12, dans lequel la fabrication est effectuée lors du procédé de moulage par injection à des températures entre 50 °C et 100 °C et dans lequel en option aucun autre additif n'est nécessaire pour la fabrication des objets en parallèle des granulés.
